# EUROPÄISCHE PATENTSCHRIFT

(11) **EP 2 888 028 B1**
(45) Veröffentlichungstag und Bekanntmachung des Hinweises auf die Patenterteilung: **17.07.2019**
(21) Anmeldenummer: 13828785.9
(22) Anmeldetag: 20.12.2013
(51) Int. Cl.: B01D 53/56

(54) **VERFAHREN UND VORRICHTUNG ZUR BEHANDLUNG VON ABGASEN**
METHOD AND DEVICE FOR TREATING EXHAUST GASES
PROCÉDÉ ET DISPOSITIF DE TRAITEMENT D'EFFLUENTS GAZEUX

(30) Priorität: 25.01.2013 DE 102013001223; 07.03.2013 DE 102013003829
(43) Veröffentlichungstag der Anmeldung: 01.07.2015
(73) Patentinhaber: Mehldau & Steinfath Umwelttechnik GmbH, 45133 Essen (DE)
(72) Erfinder: VON DER HEIDE, Bernd, 45133 Essen (DE)
(74) Vertreter: Strehlke, Ingo Kurt
(86) Internationale Anmeldenummer: PCT/EP2013/003899
(87) Internationale Veröffentlichungsnummer: WO 2014/114320

(56) Entgegenhaltungen:
- EP-A1- 0 605 745
- WO-A1-91/17814
- DE-A1- 3 606 535
- DE-A1-102011 105 419
- US-A- 6 048 510
- US-A1- 2005 000 220

## Beschreibung

Die vorliegende Erfindung betrifft das technische Gebiet der Behandlung von Abgasen, insbesondere der Behandlung von Stickoxide enthaltenden Abgasen.

Die vorliegende Erfindung betrifft insbesondere ein Verfahren zur Behandlung von Stickoxide enthaltenden Abgasen aus technischen Prozessen, wie Rauchgasen, zu Zwecken der Entfernung bzw. Abscheidung der Stickoxide und/oder zu Zwecken der Verringerung des Stickoxidgehalts mittels chemischer Reduktion der Stickoxide. Insbesondere betrifft die vorliegende Erfindung ein Verfahren zur Entstickung von Abgasen aus großtechnischen Anlagen, wie beispielsweise Kraftwerken, insbesondere Heizkraftwerken, oder Müllverbrennungsanlagen

Des Weiteren betrifft die vorliegende Erfindung eine Vorrichtung zur Behandlung von Stickoxide enthaltenden Abgasen aus technischen Prozessen, wie Rauchgasen, zu Zwecken der Entfernung bzw. Abscheidung der Stickoxide oder aber zu Zwecken der Verringerung des Stickoxidgehalts mittels chemischer Reduktion der Stickoxide.

Des Weiteren betrifft die vorliegende Erfindung die Verwendung einer Vorrichtung zur Entfernung bzw. Abscheidung von Stickoxiden aus Stickoxide enthaltenden Abgasen aus technischen Prozessen, insbesondere Rauchgasen, sowie die Verwendung einer Vorrichtung zur selektiven Abkühlung von Rauchgasen aus technischen Prozessen, insbesondere Rauchgasen.

Schließlich betrifft die vorliegende Erfindung ein Verfahren zur Behandlung von Abgasen technischer Prozesse, insbesondere Rauchgasen, vorzugsweise zu Zwecken der Abkühlung der Gase, insbesondere im Rahmen eines Verfahrens zur Entfernung bzw. Abscheidung von Stickoxiden aus Abgasen technischer Prozesse.

Bei Verbrennungsreaktionen in Gegenwart von Luft entstehen metastabile, im Allgemeinen giftige und reaktive Oxide des Stickstoffs, sogenannte Stickoxide. Verstärkt wird die Bildung von Stickoxiden durch die Verbrennung bzw. Thermo- und Pyrolyse organischer und anorganischer stickstoffhaltiger Verbindungen, welche in Großfeuerungsanlagen, wie Heizkraftwerken oder Müllverbrennungsanlagen, auftritt.

Stickoxide, insbesondere die unter der Bezeichnung nitrose Gase bekannten Verbindungen Stickstoffmonoxid und Stickstoffdioxid, welche auch mit der Kurzform NOₓ bezeichnet werden, sind jedoch nicht nur giftig und führen zu Reizungen und Schädigung der Atmungsorgane, sondern fördern darüber hinaus auch die Entstehung des sauren Regens, da sie mit Feuchtigkeit zu Säuren reagieren.

Die Freisetzung von Stickoxiden ist jedoch noch aus weiterführenden Gründen des Umweltschutzes problematisch, da sie einerseits die Bildung von Smog und des schädlichen bodennahen Ozons fördern und andererseits als Treibhausgase die Erderwärmung verstärken.

Aufgrund der nachteiligen Auswirkungen der Stickoxide auf Gesundheit und Umwelt und nicht zuletzt durch die damit verbundenen volkswirtschaftlichen Schäden wurde schon früh versucht, die Freisetzung von Stickoxiden bei Verbrennungsvorgängen zu minimieren bzw. zu unterbinden. Bei PKWs wird dies beispielsweise durch den Einsatz von Katalysatoren erreicht, welche eine fast vollständige Entfernung der Stickoxide aus den Abgasen erlauben.

Zur Vermindung des Stickoxidausstoßes von großtechnischen Anlagen, insbesondere großindustriellen Feuerungsanlagen, wurden unter Berücksichtigung der jeweiligen Gesetzeslage sowie betriebswirtschaftlicher Erwägungen verschiedene Verfahren zur Entstickung bzw. Denitrifikation (DeNOx) entwickelt, welche allein oder in Kombination eine wirksame Verminderung bzw. Vermeidung von Stickoxiden in Abgasen, insbesondere Rauchgasen, bewirken sollen.

Die Verfahren bzw. Maßnahmen zur Reduzierung des Stickoxidgehalts von Abgasen, insbesondere Rauchgasen, lassen sich dabei in Primär- und Sekundärmaßnahmen unterteilen:
Im Rahmen der Primärmaßnahmen wird der Verbrennungsvorgang derart gesteuert, dass der Stickoxidgehalt in den resultierenden Abgasen möglichst gering ist; die Stickoxide sollen sozusagen gar nicht erst entstehen. Zu den Primärmaßnahmen zählen beispielsweise die Rauchgasrezirkulation, bei welcher das Rauchgas nochmals in die Verbrennungszone geleitet wird, sowie Luft- bzw. Brennstoffstufen, bei welchen die Verbrennung derart gesteuert wird, dass verschiedene Verbrennungszonen mit unterschiedlichen Sauerstoffkonzentrationen erhalten werden. Daneben kann die Entstehung von Stickoxiden in Rauchgasen auch durch den Zusatz von Additiven oder durch Quenchen, d. h. durch Eindüsen von Wasser zur Herabsenkung der Temperatur während des Verbrennungsprozesses, vermindert werden.

Im Gegensatz zu den Primärmaßnahmen, welche die Entstehung der Stickoxide verhindern sollen, soll durch die Anwendung der Sekundärmaßnahmen die Konzentration der Stickoxide in den Abgasen, insbesondere Rauchgasen, gemindert werden. Zu den Sekundärmaßnahmen zählen beispielsweise Abscheideverfahren, bei welchen die Stickoxide chemisch gebunden oder aus dem Rauchgasstrom ausgewaschen werden. Nachteilig bei den Abscheideverfahren ist jedoch, dass große Mengen Abfallprodukte, wie beispielsweise Prozesswasser, welche oft mit weiteren Bestandteilen des Rauchgases verunreinigt sind, erhalten und aufwendig entsorgt werden müssen.

In modernen großtechnischen Anlagen werden daher als Sekundärmaßnahmen zumeist Verfahren angewendet, welche auf einer Reduktion der Stickoxide zu elementarem Stickstoff beruhen und nur zu geringen Mengen an Abfallstoffen führen, wobei generell zwischen katalytischen und nicht-katalytischen Verfahren unterschieden wird.

Die selektive katalytische Reduktion der Stickoxide (**S**elective **C**atalytic **R**eduction oder SCR) umfasst katalytische Verfahren, bei welchen die Stickoxide unter Zuhilfenahme von Metallkatalysatoren zu elementarem Stickstoff umgesetzt werden. Mit SCR-Verfahren lassen sich im Allgemeinen die besten Denitrifikationswerte erhalten, wobei der Einsatz des Katalysators das Verfahren jedoch deutlich kostenintensiver und wirtschaftlich wenig rentabel macht. Darüber hinaus sind die Anlagen zur Durchführung des SCR-Verfahrens nicht nur in der Anschaffung, sondern auch im Unterhalt äußerst kostenintensiv, da die empfindlichen Katalysatoren in engen Zeitintervallen gewartet bzw. ausgetauscht werden müssen. Gerade in Großfeuerungsanlagen deren Brennstoffzusammensetzung oft nur unzureichend bestimmt werden kann, wie beispielsweise bei Müllverbrennungsanlagen, besteht daher stets die Gefahr einer Vergiftung der Katalysatoren durch Verunreinigungen des Rauchgases. Dieses Risiko kann nur durch zusätzliche kostenintensive Maßnahmen reduziert werden.

Die selektive nicht-katalytische Reduktion (Selective Non Catalytic Reduction oder SNCR) beruht dagegen auf der Thermolyse von Stickstoffverbindungen, insbesondere Ammoniak oder Harnstoff, welche dann in einer Komproportionierungsreaktion mit den Stickoxiden zu elementarem Stickstoff reagieren.

Die selektive nicht-katalytische Reduktion ist im Vergleich zur selektiven katalytischen Reduktion deutlich kostengünstiger durchzuführen: So betragen die Kosten für Anschaffung und Unterhalt von SNCR-Anlagen gerade einmal 10 bis 20 % der Kosten entsprechender SCR-Anlagen.

Problematisch an den SNCR-Verfahren ist jedoch, dass diese in ihrer Wirksamkeit nicht an die Wirksamkeit katalytischer Verfahren heranreichen, so dass beispielsweise bei einer weiteren Absenkung der gesetzlich erlaubten Grenzwerte von Stickoxiden in Abgasen, insbesondere Rauchgasen, die meisten SNCR-Anlagen nicht mehr betrieben werden dürften.

Ein weiterer Nachteil der auf der selektiven nicht-katalytischen Reduktion von Stickoxiden beruhenden Verfahren ist, dass das Reduktionsmittel im Überschuss eingesetzt werden muss und nicht vollständig abreagiert, so dass das Abgas eine gewisse, unter Umständen nicht unbedeutende Ammoniakbelastung aufweist. Überschüssiges Ammoniak im Abgas muss entweder abgetrennt oder durch prozesstechnische Maßnahmen in seinem Gehalt derart reduziert werden, dass eine Abgabe des Abgasstroms an die Umwelt möglich ist.

Daneben gibt es auch Verfahren, welche sowohl auf einer katalytischen Wirkungsweise als auch auf dem Einsatz von Reduktionsmitteln beruhen, wobei jedoch auch diese Verfahren nicht die prinzipiellen Nachteile der jeweiligen Verfahren (hohe Kosten für den Einsatz katalytischer Verfahren bzw. geringe Wirksamkeit für den Einsatz von Reduktionsmitteln) überwinden können.

Zwar gibt es mittlerweile neuartige SNCR-Anlagen, welche auf der kombinierten Verwendung mehrerer Reduktionsmittel beruhen und in ihrer Wirksamkeit den katalytischen Verfahren nahezu ebenbürtig sind, jedoch nicht unter allen Betriebsbedingungen optimale Ergebnisse liefern können.

So betrifft DE 10 2011 105 419 A1 ein Verfahren zur Behandlung von Stickoxide enthaltenden Abgasen aus technischen Prozessen, wie Rauchgasen, zu Zwecken der Entfernung und/oder Abscheidung der Stickoxide bzw. zu Zwecken der Verringerung des Stickoxidgehalts mittels chemischer Reduktion der Stickoxide, insbesondere ein Verfahren zur Entstickung von Abgasen aus großtechnischen Anlagen, wobei mindestens zwei voneinander verschiedene stickstoffhaltige Reduktionsmittel mit den Stickstoffe enthaltenden Abgasen in Kontakt gebracht bzw. in den Strom der Stickoxide enthaltenden Abgase eingebracht werden.

Insbesondere bei der Nachrüstung von Brennkesseln mit SNCR-Anlagen sowie beim Betrieb von Brennkesseln unter Volllast kommt es oftmals vor, dass eine Eindüsung der Reduktionsmittel in einem für das SNCR-Verfahren günstigen Temperaturbereich durch die Konstruktion des Kessels nicht möglich ist oder die für die Reduktion günstigen Temperaturen im Bereich der Heizflächen bzw. Wärmetauscher erreicht werden. In diesen Fällen ist ein Großteil der Rauchgase, welcher bis zu 50 % des Rauchgasvolumens betragen kann, nicht durch die Reduktionsmittel erreichbar oder das Reduktionsmittel muss in einem ungünstigen Temperaturbereich in den Abgasstrom eingebracht werden. Weiterhin droht bei Verwendung von Harnstoff als Reduktionsmittel im Bereich der Wärmetauscher die Gefahr der Ablagerung von Ammoniak- bzw. Ammoniumsalzen und somit der Korrosion.

Die Einbringung bzw. Eindüsung des Reduktionsmittels in den Rauchgasstrom im optimalen Temperaturbereich ist jedoch kritisch für die Wirksamkeit der Stickoxidreduktion und somit der Denitrifikation.

Bei der Eindüsung der Reduktionsmittel oberhalb von 1.100 °C wird im zunehmendem Maße das Reduktionsmittel zu Stickoxiden oxidiert, wodurch einerseits die Abscheiderate an Stickoxiden sinkt und andererseits der Verbrauch an Reduktionsmitteln steigt. Wird hingegen bei zu niedrigeren Temperaturen eingedüst, verringert sich die Reaktionsgeschwindigkeit, wodurch der sogenannte Ammoniak-Schlupf entsteht, der im Verlauf des weiteren Weges der Abgase, insbesondere der Rauchgase, zur Bildung von Ammoniak- bzw. Ammoniumsalzen führt. Hierdurch entstehen Sekundärprobleme, wie beispielsweise eine Belastung bzw. Kontamination der Flugasche mit Ammoniak- bzw. Ammoniumsalzen, deren Menge sich einerseits erheblich vergrößert und deren Entsorgung andererseits aufwendiger und damit kostenintensiver wird.

Es wurde bereits versucht, dieser Problematik zu begegnen, indem beispielsweise die Heizflächen bzw. Wärmetauscher oberhalb der Brennkessel verschiebbar angeordnet wurden oder eine Eindüsung von Reduktionsmitteln mittels längerer, wassergekühlter Eindüslanzen durchgeführt wurde. Aber auch diese Modifikationen können nicht verhindern, dass betriebsbedingt auftretende Temperaturschieflagen, d. h. große Temperaturunterschiede und unterschiedliche Strömungsgeschwindigkeiten in einer Ebene senkrecht zur Hauptströmungsrichtung der Abgase, auftreten, welche dazu führen, dass die Reduktionsmittel nicht über den gesamten Kesselquerschnitt gleichmäßig verteilt werden. So resultiert stets eine Eindüsung von Reduktionsmitteln in Bereiche des Rauchgases, die außerhalb des wirksamen Temperaturfensters bzw. -bereichs liegen. Die Folgen sind wiederum ein unzureichender Stickoxidabscheidegrad, ein hoher Reduktionsmittelverbrauch sowie ein hoher Ammoniak-Schlupf.

Um diesen Problemen zu begegnen, wurden bereits Versuche unternommen, bei welchen den Reduktionsmitteln zusätzlich Wasser beigemischt wurde, um die Rauchgase auf die für die Reduktion notwendigen Temperaturen abzukühlen. Mit diesem Verfahren lassen sich vereinzelt Verbesserungen in der Abscheidung bzw. Entfernung der Stickoxide aus den Rauchgasen erreichen, wobei jedoch das Gesamtverfahren immer noch unbefriedigend verläuft:
So müsste bei niedriger Last im Brennkessel sowie niedrigen Rauchgastemperaturen die Wassermenge reduziert werden, um eine zu starke Abkühlung der Rauchgase zu vermeiden. Da bei der Eindüsung das Tropfenspektrum und damit die Eindringtiefe sowie die Verteilung der Reduktionsmittel im Abgasstrom von der jeweiligen Durchflussmenge abhängt, führt eine zu geringe Wassermenge zu einer ungünstigen Verteilung der Reduktionsmittel im Rauchgas und somit zu einem sinkenden Abscheidegrad der Stickoxide sowie einem erhöhten Verbrauch an Reduktionsmitteln.

Wird hingegen bei sinkenden Rauchgastemperaturen die Flüssigkeitsmenge konstant gehalten, so bleibt zwar die Tropfenverteilung bzw. das Tropfenspektrum und damit die Eindringtiefe sowie die Verteilung der Reduktionsmittel in Rauchgasen konstant, jedoch wird das Rauchgas so stark abgekühlt, dass die Reduktionsbedingungen ungünstig sind und ein höherer Ammoniak-Schlupf resultiert.

Schließlich bleibt auch bei diesem Verfahren das Problem ungelöst, dass bei vielen Kesselanlagen, insbesondere wenn diese mit einer Entstickungsanlage nachgerüstet sind, das Temperaturfenster für eine wirksame und optimale Reduktion der in den Rauchgasen enthaltenen Stickoxide, insbesondere bei Volllast der Kesselanlage, häufig in den schwer zugänglichen engen Zwischenräumen im Bereich der Wärmetauscher bzw. Heizflächen liegt. In diesem Bereich ist es einerseits schwierig, überhaupt das gesamte Rauchgasvolumen mit dem Reduktionsmittel zu erreichen, andererseits kann insbesondere bei einer Verwendung von Harnstoff nicht ausgeschlossen werden, dass Harnstoffteilchen auf die Kesselrohre und Wärmetauscher bzw. Heizflächen auftreffen und dort zu Schäden durch Korrosion führen. Die Verwendung von Harnstofflösungen als Reduktionsmittel kann aufgrund der höheren Eindringtiefe in das Rauchgas jedoch nicht immer vermieden werden.

Insgesamt zeigt sich somit, dass es bislang noch kein kostengünstig und flexibel einsetzbares Verfahren zur Entstickung von Abgasen aus technischen Prozessen, wie Rauchgasen, gibt, welches unter allen Gegebenheiten - auch unter widrigen bzw. ungünstigen konstruktiven Ausgestaltungen des Brennkessels - konstant gute Abscheideraten von Stickoxiden aus Abgasen von technischen Prozessen ermöglicht.

Der vorliegenden Erfindung liegt daher die Aufgabe zugrunde, ein Verfahren und eine Vorrichtung bzw. Anlage zur Behandlung von Stickoxide enthaltenden Abgasen aus technischen Prozessen, wie Rauchgasen, zu Zwecken der Entfernung bzw. Abscheidung der Stickoxide und/oder zu Zwecken der Verringerung des Stickoxidgehalts vorzugsweise mittels chemischer Reduktion der Stickoxide bereitzustellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist eine Aufgabe der vorliegenden Erfindung darin zu sehen, eine zur Durchführung dieses Verfahrens geeignete Vorrichtung bzw. Anlage bereitzustellen, mit welcher Abgase aus großtechnischen Anlagen entstickt werden können, wobei das Verfahren und die Vorrichtung bzw. Anlage flexibel einsetzbar sein sollen, insbesondere auch zur Nachrüstung von bereits vorhandenen Brennkesseln geeignet sind, und welche die Effizienz bzw. den Wirkungsgrad einer selektiven katalytischen Reduktion erreichen, der Kostenaufwand jedoch vergleichbar mit einer üblichen selektiven nicht-katalytischen Reduktion ist.

Des Weiteren ist es eine Aufgabe der vorliegenden Erfindung, ein Verfahren bereitzustellen, mit welchem Rauchgase selektiv gekühlt werden. Insbesondere ist eine Aufgabe der vorliegenden Erfindung, ein Verfahren zur Verfügung zu stellen, mit welchem Rauchgase auf spezielle Temperaturen abgekühlt und so auf eine weitergehende Behandlung vorbereitet werden.

Die zuvor geschilderte Aufgabenstellung wird erfindungsgemäß durch ein Verfahren nach Anspruch 1 gelöst; weitere vorteilhafte Weiterbildungen und Ausgestaltungen des erfindungsgemäßen Verfahrens sind Gegenstand der diesbezüglichen Verfahrensunteransprüche.

Ein weiterer Gegenstand der vorliegenden Erfindung ist eine Vorrichtung bzw. Anlage nach Anspruch 11; weitere, vorteilhafte Weiterbildungen und Ausgestaltungen dieses Erfindungsaspekts sind Gegenstand des diesbezüglichen Vorrichtungsunteranspruchs.

Weiterer Gegenstand der vorliegenden Erfindung ist die Verwendung der erfindungsgemäßen Vorrichtung nach Anspruch 13.

Wiederum weiterer Gegenstand der vorliegenden Erfindung ist die Verwendung der erfindungsgemäßen Vorrichtung nach Anspruch 14.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Verfahren zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts, insbesondere ein Verfahren zur Entstickung von Abgasen aus großtechnischen Anlagen, wobei
(a) in einem ersten Verfahrensschritt eine selektive Abkühlung der Abgase erfolgt, wobei mindestens ein Kühlmittel in den Strom der Abgase eingebracht und/oder mit diesem in Kontakt gebracht wird, wobei das Kühlmittel eine Kühlfüssigkeit ist, wobei das Kühlmittel mittels Eindüseinrichtungen in den Abgasstrom eingebracht wird, wobei durch die Einbringung des Kühlmittels in den Abgasstrom der Abgasstrom insgesamt oder bereichsweise abgekühlt wird und wobei die Abgase auf Temperaturen im Bereich von 750 bis 1.200 °C gekühlt werden; und
(b) gleichzeitig und/oder nachfolgend in einem zweiten Verfahrensschritt die Entfernung und/oder Abscheidung der Stickoxide aus den Abgasen erfolgt, wobei die Abscheidung und/oder Entfernung der Stickoxide aus den Abgasen mittels chemischer Reduktion der Stickoxide erfolgt und wobei mindestens ein stickstoffhaltiges Reduktionsmittel mit den Stickoxide enthaltenden Abgasen in Kontakt gebracht wird und/oder in den Strom der Stickoxide enthaltenden Abgase eingebracht wird,
wobei mindestens ein Temperaturprofil der Abgase erstellt wird, wobei auf Grundlage des ermittelten Temperaturprofils der Abgase der Abgasstrom in Sektionen unterteilt wird, wobei den Sektionen definierte einzelne Eindüseinrichtungen zur Einbringung des Kühlmittels in den Abgasstrom und/oder definierte Gruppen von Eindüseinrichtungen zur Einbringung des Kühlmittels in den Abgasstrom zugeordnet werden, wobei die Eindüseinrichtungen zur Einbringung des Kühlmittels in den Abgasstrom einzeln oder gruppenweise auf Grundlage des ermittelten Temperaturprofils der Abgase und/oder des Lastsignals gesteuert werden, wobei die Einbringung des Kühlmittels in den Abgasstrom derart erfolgt, dass ein gewünschtes Temperaturprofil des Abgasstroms eingestellt wird.

Die vorliegende Erfindung stellt somit ein Verfahren bereit, in welchem Abgase aus technischen Prozessen, insbesondere Rauchgase, erst abgekühlt und anschließend entstickt werden, d. h. die in den Abgasen enthaltenden Stickoxide werden aus den Abgasen entfernt bzw. abgeschieden. Durch die selektive Kühlung der Abgase werden diese optimal auf die weitergehende Abgasbehandlung, insbesondere die Entfernung von Stickoxiden bzw. deren Abscheidung, vorbereitet. Insbesondere wird gewährleistet, dass die weitere Abgasbehandlung, insbesondere die Entfernung bzw. Abscheidung der Stickoxide aus den Abgasen, in einen optimalen Temperaturbereich erfolgt.

Das erfindungsgemäße Verfahren kann sowohl als SCR-Verfahren als auch als SNCR-Verfahren durchgeführt werden, da auch das SCR-Verfahren spezielle Temperaturfenster für eine hohe Wirksamkeit benötigt.

Im Rahmen der vorliegenden Erfindung wird es jedoch bevorzugt, wenn das erfindungsgemäße Verfahren im Rahmen eines SNCR-Verfahrens durchgeführt wird. Das SNCR-Verfahren ist im Vergleich zum SCR-Verfahren deutlich einfacher und kostengünstiger durchzuführen, insbesondere ist auch eine Nachrüstung von Brennkesseln mit SNCR-Anlagen im Allgemeinen ohne Weiteres möglich. Darüber hinaus bietet das erfindungsgemäße Verfahren die Möglichkeit, die bei SNCR-Anlagen bzw. -Verfahren oftmals auftretenden Probleme und Nachteile, wie beispielsweise ein lediglich geringer Wirkungsgrad bei der Entstickung der Abgase oder das erforderliche Eindüsen des Reduktionsmittels in nur schwer zugängliche Bereiche der Anlage, da nur dort ein für die Reduktion günstiger Temperaturbereich vorliegt, zu vermeiden.

Durch die selektive Kühlung der Abgase lässt sich ein spezielles Temperaturprofil des Rauchgasstroms einstellen. Dieses kann derart abgestimmt werden, dass eine optimale Zugabe des Reduktionsmittels ermöglicht wird, insbesondere wird es durch die vorliegende Erfindung möglich, das Reduktionsmittel derart auszuwählen bzw. zusammenzustellen, dass es in Bezug auf die Verteilung im Abgasstrom, die Eindringtiefe sowie die Reaktionskinetik optimal auf die zuvor durch die Kühlung eingestellte Temperatur, die Rauchgasgeschwindigkeit und die Rauchgasmenge abgestimmt ist.

Das erfindungsgemäße Verfahren liefert somit Abscheideraten von Stickoxiden aus Abgasen, welche mit denen katalytischer Reduktionsverfahren vergleichbar sind, wobei jedoch die Kostenvorteile in Anschaffung und Unterhalt einer SNCR-Anlage erhalten bleiben.

Insbesondere wird durch das erfindungsgemäße Verfahren gleichfalls gewährleistet, dass das Volumen des Abgasstroms auch unter ungünstigen konstruktiven Gegebenheiten zumindest annähernd vollständig mit dem Reduktionsmittel behandelt werden kann. Liegt beispielsweise die optimale Temperaturzone zur Eindüsung von Reduktionsmitteln bei Volllast eines Brennkessels in einem aus konstruktiven Gründen nicht oder nur begrenzt zugänglichem Bereich, so dass eine Eindüsung des Reduktionsmittels nicht oder nur unzureichend möglich ist, ist es möglich, durch die selektive Kühlung den zur Reduktion optimalen Temperaturbereich in besser zugängliche Bereiche der Anlage zu verlagern. Auf diese Weise können auch Bereiche des Rauchgasstroms behandelt werden, welche andernfalls mit einem SNCR-Verfahren nicht zugänglich sind.

Durch das erfindungsgemäße Verfahren, welches eine selektive Abkühlung der Abgase beinhaltet, können auch große Temperaturschieflagen, d. h. starke Temperaturunterschiede im Rauchgasstrom, ausgeglichen werden, so dass eine effiziente Entfernung bzw. Abscheidung der Stickoxide aus den Rauchgasen erfolgen kann.

Das erfindungsgemäße Verfahren ermöglicht somit überraschenderweise eine deutlich effizientere Entfernung von Stickoxiden aus Abgasen, insbesondere Rauchgasen, wobei seine Effizienz bzw. Wirksamkeit mit der Effizienz von katalytischen Reduktionsverfahren vergleichbar ist.

Insbesondere bei der Verwendung von Reduktionsmittelgemischen, wie beispielsweise Mischungen von Ammoniaklösungen und Harnstofflösungen, kann ein optimales Gemisch für das jeweilig eingestellte Temperaturprofil erreicht werden, so dass einerseits die Abscheiderate der Stickoxide deutlich erhöht wird, andererseits der Ammoniak-Schlupf sowie der Verbrauch an Reduktionsmitteln deutlich reduziert werden.

Im Vergleich zu bereits bekannten Verfahren, welche auf dem Einsatz mehrerer Reduktionsmittel beruhen, ist das erfindungsgemäße Verfahren deutlich einfacher und kostengünstiger durchzuführen und liefert konstantere Abscheidungsraten, da durch die selektive Kühlung und die dadurch erfolgende Einstellung eines speziellen Temperaturprofils der Rauchgase stets optimale Bedingungen für die Reduktion der Stickoxide zu elementarem Stickstoff erhalten werden.

Weiterhin kann mit dem erfindungsgemäßen Verfahren auch die bei SNCR-Verfahren des Standes der Technik auftretende Korrosion von Anlagenteilen, wie sie insbesondere bei Verwendung von Harnstoff als Reduktionsmittel beobachtet wird, vermieden werden.

Erfindungsgemäß handelt es sich bei dem Kühlmittel um eine Kühlflüssigkeit, insbesondere um eine nichtenzündbare und/oder eine inerte Kühlflüssigkeit, vorzugsweise Wasser. Wasser wird im Allgemeinen als Kühlflüssigkeit bzw. als Kühlmittel bevorzugt, da es kostengünstig erhältlich und in großen Mengen verfügbar ist. Darüber hinaus wird Wasser bei den meisten SNCR-Verfahren bereits zum Lösen der Reduktionsmittel bzw. zum Einstellen eines spezifischen Gehalts an Reduktionsmitteln in der Reduktionsmittellösung verwendet. Bei einer Verwendung von Wasser als Kühlmittel kann somit auf das gleiche Wasserreservoir bzw. die gleichen Anlagenteile zur Wasserversorgung wie bei der Einstellung der Reduktionsmittel zurückgegriffen werden.

Im Rahmen der vorliegenden Erfindung werden besonders gute Ergebnisse erhalten, wenn das Kühlmittel in feiner Verteilung in den Abgasstrom eingebracht wird, insbesondere eingesprüht oder eingedüst wird. Als besonders effizient hat sich hierbei eine Eindüsung des Kühlmittels erwiesen, da in Abhängigkeit der Ausbildung der Düsen sowie einer darauf abgestimmten Druckbeaufschlagung und Druckflussmenge ein besonders optimales Tropfenspektrum sowie eine flexible einstellbare Eindringtiefe des Kühlmittels in die Rauchgase erreicht werden kann. Der zur Eindüsung benötigte Druck wird dabei üblicherweise durch Druckluft oder Dampf erzeugt.

Im Rahmen der vorliegenden Erfindung wird das Kühlmittel mittels Eindüseinrichtungen, insbesondere Eindüslanzen, in den Abgasstrom eingebracht. In diesem Zusammenhang hat es sich als besonders vorteilhaft erwiesen, wenn jede Eindüseinrichtung eine oder mehrere, insbesondere 1 bis 20, vorzugsweise 1 bis 15, bevorzugt 1 bis 10, besonders bevorzugt 1 bis 5, Düsen zur Einbringung des Kühlmittels in den Abgasstrom aufweist. Durch eine hohe Anzahl von Düsen kann eine besonders gleichmäßige Verteilung des Kühlmittels über den gesamten Querschnitt des Abgasstroms erreicht werden.

Eine besonders effiziente Abkühlung des Abgasstroms wird insbesondere dann erreicht, wenn die Eindüseinrichtungen in 1 bis 10, insbesondere 1 bis 7, vorzugsweise 1 bis 5, bevorzugt 1 bis 3, Eindüsebenen, besonders bevorzugt einer Eindüsebene, angeordnet sind. Für die Mehrzahl der Anwendungen reicht es dabei aus, wenn eine Eindüsebene zur Einbringung des Kühlmittels in den Abgasstrom vorhanden ist. Sollte es jedoch nicht möglich sein, das gewünschte Temperaturprofil mit nur einer Eindüsebene zu erreichen, können auch mehrere Eindüsebenen vorgesehen sein, wobei gegebenenfalls Temperaturbestimmungen zwischen den einzelnen Ebenen erfolgen und auch bereits Reduktionsmittel in den Rauchgasstrom eingebracht werden kann.

Eine Anordnung der Eindüseinrichtungen in Eindüsebenen vorzugsweise senkrecht zur Hauptrichtung des Abgasstroms ermöglicht eine besonders gleichmäßige Verteilung des Kühlmittels und somit eine besonders gleichmäßige Abkühlung des Abgasstroms. Von dieser Anordnung kann jedoch abgewichen werden, wenn beispielsweise nur ein Teil des Abgasstroms gekühlt werden soll, beispielsweise wenn dieser Bereich später mit weiteren Eindüseinrichtungen nicht mehr zu erreichen ist, wie zwischen den Wärmetauschern bzw. Heizflächen von Brennkesseln.

In diesem Zusammenhang kann es vorgesehen sein, dass jede Eindüsebene 1 bis 20, insbesondere 1 bis 15, vorzugsweise 1 bis 12, Eindüseinrichtungen aufweist. Gleichfalls kann es auch vorgesehen sein, dass das Kühlmittel über 1 bis 200, insbesondere 2 bis 100, vorzugsweise 5 bis 60, bevorzugt 30 bis 36, besonders bevorzugt 1 bis 12, Eindüseinrichtungen in den Abgasstrom eingebracht wird.

Besonders gute Ergebnisse werden im Rahmen der vorliegenden Erfindung erhalten, wenn die Eindüseinrichtungen einzeln und/oder gruppenweise, vorzugsweise einzeln, gesteuert werden.

Hierbei kann es vorgesehen sein, dass der Austritt des Kühlmittels aus den Eindüseinrichtungen für jede Eindüseinrichtung individuell und/oder für Gruppen von Eindüseinrichtungen gesteuert wird. Eine gruppenweise Steuerung der Eindüseinrichtungen und insbesondere eine Einzelsteuerung der Eindüseinrichtungen ermöglicht eine besonders flexibel einstellbare und wirksame Kühlung der Abgase. So ist es möglich, die Abgase gezielt an den Stellen durch Eindüsung des Kühlmittels abzukühlen, an welchen der Temperaturbereich für eine Reduktion der Stickoxide nicht optimal ist. Durch die flexible Steuerung der Eindüseinrichtungen können somit stets optimale Bedingungen für die nachfolgende Behandlung, nämlich die Entstickung der Abgase, bereitgestellt werden.

Erfindungsgemäß erfolgt die Einbringung des Kühlmittels in den Abgasstrom derart, dass ein gewünschtes, insbesondere zuvor festgelegtes, Temperaturprofil des Abgasstroms eingestellt wird.

Hierbei ist es möglich, dass in Abhängigkeit von den jeweiligen Anforderungen beispielsweise ein gleichmäßiges Temperaturprofil, insbesondere mit einer einheitlichen Temperatur und/oder einem engen Temperaturintervall, über den gesamten Querschnitt des Abgasstroms eingestellt werden kann. Gleichfalls ist es jedoch auch möglich, ein Temperaturprofil mit einer ungleichmäßigen Temperaturverteilung einzustellen.

Unter dem Querschnitt des Abgasstroms ist im Rahmen der vorliegenden Erfindung ein Querschnitt senkrecht zur Hauptströmungsrichtung der Abgase gemeint.

Ein gleichmäßiges Temperaturprofil mit einer insbesondere einheitlichen Temperatur wird dabei prinzipiell bevorzugt, da auf diese Weise die besten Bedingungen für die nachfolgende Reduktion der Stickoxide erhalten werden können. Mit einem gleichmäßigen Temperaturprofil können deutlich höhere Abscheidegrade der Stickoxide bei gleichzeitig deutlich verringertem Ammoniak-Schlupf und deutlich verringertem Reduktionsmittelverbrauch erreicht werden.

Die Einstellung eines ungleichmäßigen Temperaturprofils kann jedoch trotzdem sinnvoll und gewünscht sein, beispielsweise, wenn der optimale Temperaturbereich für die Reduktion der Stickoxide im Rauchgas in einem konstruktionsbedingt nicht bzw. nur schwer zugänglichen Bereich der Anlage, wie beispielsweise im Bereich der Wärmetauscher bzw. Heizflächen, liegt. Hier kann dann selektiv der Teil des Rauchgasstroms gekühlt und anschließend vor Eintritt in den Bereich der Wärmetauscher mit Reduktionsmittel versetzt werden, welcher zwischen den Wärmetauschern bzw. Heizflächen nicht mehr mit Eindüseinrichtungen zu erreichen ist. Dieses Problem tritt insbesondere auf, wenn Brennkessel unter Volllast betrieben werden oder aber mit SNCR-Anlagen nachgerüstet werden. In diesen Fällen ist es bei Anwendung der bisherigen SNCR-Verfahren möglich, dass bis zu 50 % des Abgasstroms und somit der Stickoxide nicht nur das Reduktionsmittel erreicht werden können.

Das erfindungsgemäße Verfahren ermöglicht darüber hinaus den Ausgleich von Temperaturschieflagen im Brennkessel bzw. im Abgasstrom, welche durch eine ungleichmäßige Verbrennung des Brennstoffs im Brennkessel entstehen.

Im Rahmen der vorliegenden Erfindung wird durch die Einbringung des Kühlmittels in den Abgasstrom der Abgasstrom insgesamt oder bereichsweise abgekühlt. In diesem Zusammenhang kann es vorgesehen sein, dass der gesamte Querschnitt des Abgasstroms gekühlt bzw. abgekühlt wird und/oder dass ausgewählte Bereiche des Querschnitts des Abgasstroms, insbesondere senkrecht zur Hauptströmungsrichtung des Abgasstroms, abgekühlt werden.

Unter dem Begriff der "bereichsweisen" Kühlung des Abgasstroms soll im Rahmen der vorliegenden Erfindung verstanden werden, dass durch die Einbringung des Kühlmittels in den Abgasstrom zumindest einzelne Sektionen oder Bereiche einer Ebene, welche senkrecht zur Hauptströmungsrichtung der Abgase verläuft, abgekühlt werden.

Nach der Erfindung werden die Abgase insbesondere zumindest bereichsweise auf Temperaturen im Bereich von 750 bis 1.200 °C, insbesondere 800 bis 1.150 °C, vorzugsweise 850 bis 1.100 °C abgekühlt.

In diesem Zusammenhang kann es vorgesehen sein, dass der gesamte Querschnitt des Abgasstroms abgekühlt wird und/oder dass ausgewählte Bereiche des Querschnitts des Abgasstroms abgekühlt werden.

In den zuvor genannten Temperaturbereichen wird eine besonders gute Reaktion der Reduktionsmittel mit den in den Abgasen enthaltenden Stickoxiden erreicht, so dass in diesen Temperaturbereichen die Stickoxideabscheiderate besonders hoch ist, während gleichzeitig der Ammoniak-Schlupf sowie der Reduktionsmittelverbrauch besonders gering sind.

Eine bereichsweise Kühlung auf die vorgenannten Temperaturen kommt insbesondere immer dann in Betracht, wenn Teile des Abgasstroms einen konstruktionsbedingt schwer zugänglichen Teil der Anlage durchlaufen, in welchem jedoch der optimale Temperaturbereich für eine Reduktion der Stickoxide liegt. Dieser spezielle Teil der Abgase kann dann vor Eintritt in die schwer- oder unzugänglichen Bereiche gezielt abgekühlt und mit Reduktionsmitteln behandelt werden, während die anderen Bereiche des Abgasstroms nicht abgekühlt und/oder mit Reduktionsmitteln behandelt werden. Bevorzugt wird jedoch stets - wenn möglich - ein möglichst gleichmäßiges Temperaturprofil des Abgasstroms.

Bei den im Rahmen der vorliegenden Erfindung in erster Linie entfernten Stickoxiden handelt es sich überwiegend um nitrose Gase, d. h. Stickstoffmonoxid und Stickstoffdioxid. Darüber hinaus werden jedoch auch weitere Stickoxide sicher aus dem Abgasstrom entfernt.

Das erfindungsgemäße Verfahren, insbesondere die Reduktion der Stickoxide, wird im Allgemeinen in Abwesenheit eines Katalysators durchgeführt. Bei dem erfindungsgemäßen Verfahren entfallen somit die hohen Anschaffungs- und Unterhaltskosten für einen Katalysator zur Reduktion der Stickoxide.

Bevorzugt wird das erfindungsgemäße Verfahren als selektive nicht-katalytische Reduktion, insbesondere als SNCR-Verfahren, durchgeführt.

Bei der selektiven nicht-katalytischen Reduktion (Selective Non Catalytic Reduction, SNCR) von Stickoxiden werden Reduktionsmittel zumeist in wässriger Lösung (wie Ammoniakwasser oder wässrigen Harnstofflösungen) oder gasförmig (wie beispielsweise Ammoniak) in die heißen Abgase bzw. Rauchgase eingedüst. Die Reduktionsmittel reagieren dann mit den Stickoxiden, wie am Beispiel der Reduktionsmittel Ammoniak und Harnstoff anhand der nachfolgenden Reaktionsgleichungen (1) und (2) verdeutlicht, zu molekularem Stickstoff, Wasser und Kohlendioxid.

(NH₂)₂CO + 2 NO + ½ O₂ → 2 N₂ + CO₂ + 2 H₂O (1)

4 NH₃ + 4 NO + O₂ → 4 N₂ + 6 H₂O (2)

Der optimale Temperaturbereich, in der eine signifikante Reduktion der Stickoxide erzielt wird, liegt - abhängig von der Rauchgaszusammensetzung - üblicherweise im Bereich von 900 und 1.100 °C. Oberhalb dieses Temperaturbereichs wird in zunehmenden Maße Ammoniak oxidiert, d. h. es bilden sich zusätzliche Stickoxide.

Bei Temperaturen darunter verringert sich die Reaktionsgeschwindigkeit, wodurch ein so genannter Ammoniak-Schlupf entsteht, der im Verlauf des weiteren Rauchgasweges zur Bildung von Ammoniaksalzen bzw. Ammoniumsalzen und dadurch zu Sekundärproblemen, wie Korrosion, führen kann; der Ammoniak-Schlupf sollte deshalb möglichst gering gehalten werden.

Unter Ammoniak-Schlupf ist insbesondere derjenige Teil des Ammoniaks zu verstehen, welcher nicht mit den Stickoxiden zu elementarem Stickstoff reagiert. Das Ammoniak stammt dabei entweder aus einer Überdosierung von Ammoniak oder ist ein Abbauprodukt der Thermolyse von stickstoffhaltigen Reduktionsmitteln, wie beispielsweise Harnstoff.

Für die meisten Anwendungsfälle werden bislang entweder Harnstoff oder Ammoniakwasser als Reduktionsmittel verwendet. Für eine optimale Stickoxidabscheidung bei minimalem Ammoniak-Schlupf muss das Reduktionsmittel mit den Rauchgasen gleichmäßig im optimalen Temperaturbereich durchmischt werden. Um den Impuls für die vollkommene Durchmischung zu erreichen, ist dabei für Ammoniakwasser ein erheblich höherer Energieaufwand erforderlich als für Harnstoff, da Ammoniak einen deutlich höheren Dampfdruck aufweist.

Darüber hinaus weisen wässrige Lösungen von Harnstoff und Ammoniak eine unterschiedliche Reaktionskintetik auf, was insbesondere darauf beruht, dass der in Wasser gelöste Harnstoff erst dann in reaktionsfähige Radikale gespalten werden kann, wenn das Wasser, welches die Harnstoffteilchen umgibt, komplett verdampft ist, weshalb mit relativ geringem Energieaufwand eine hohe Eindringtiefe in die Abgase sichergestellt wird.

Bei der Verwendung von wässrigen Ammoniaklösungen dagegen dampft das Ammoniak unmittelbar nach Eintritt in die Rauchgase aus den einzelnen Wassertröpfchen aus, so dass die Reaktion vorzugsweise in der Nähe der Kesselwände stattfindet. So erreicht der Partialdruck von Ammoniak bei 38 °C bereits 1 bar. Der für die optimale Eindringtiefe der Reduktionsmittel notwendige Impuls kann bei dem dann gasförmig vorliegenden Ammoniak wegen der gegenüber einem Wassertropfen geringen Masse nur durch einen höheren Energieaufwand erreicht werden, wozu die entsprechende Dampf- bzw. Luftmenge deutlich erhöht werden muss. Zusätzlich zu den höheren Betriebskosten, die sich aufgrund der höheren Energieverbräuche ergeben, sind die Investitionskosten für eine mit Ammoniakwasser betriebene Anlage aufgrund der Sicherheitsanforderungen wesentlich höher, da Ammoniak ein giftiges Gas ist, welches sich bei Umgebungstemperatur leicht in Wasser lösen lässt.

Ammoniakwasser wird daher der Wassergefährdungsklasse 2 zugeordnet und unterliegt darüber hinaus wegen des hohen Gefährdungspotentials für die Umwelt den technischen Richtlinien für Dampfkessel.

Wegen der chemischen Bindung von Ammoniak im Harnstoffmolekül können dagegen Harnstofflösungen bis 106 °C erwärmt werden, ohne dass Ammoniakgas ausdampft. Die Zerlegung von Harnstoff in Ammoniak- und Kohlendioxidgas beginnt erst ab 130 °C und erreicht ein Maximum bei ca. 380 °C. Da diese hohen Temperaturen bei der Lagerung nicht erreicht werden können, sind die für Ammoniakwasser notwendigen Sicherheitsvorkehrungen nicht nötig. Harnstofflösung ist gemäß des Wasserhaushaltsgesetzes (WHG) nur der Wassergefährdungsklasse 1 zuzuordnen (d.h. es muss nur sichergestellt sein, dass Harnstoff nicht in das Grundwasser gelangen kann, wozu eine Auffangwanne für den Lagertank ausreichend ist).

Harnstofflösungen besitzen jedoch den Nachteil, dass bei einer Überdosierung von Harnstoff sich dieser in fester Form auf Teilen der Anlage ablagert und zu unerwünschter Korrosion führt. Dies gilt umso mehr, als Anlagen zur Durchführung von SNCR-Verfahren relativ unmittelbar nach den Brennkammern installiert sind, d. h. noch vor den üblicherweise vorhandenen Wärmetauschern. Bei hohen Lasten bzw. bei einer hohen Leistung des Brennkessels kann dann eine Eindüsung der Harnstofflösung in den Bereich der Wärmetauscher erforderlich sein, um eine effiziente Reduktion der Stickoxide zu ermöglichen. Dies birgt jedoch die Gefahr, dass sich fester Harnstoff auf den Wärmetauschern anlagert und so zu einer Korrosion der Teile führt, welches die Lebensdauer der Anlage verringert und die Betriebskosten deutlich erhöht.

Erfindungsgemäß ist es vorgesehen, dass mindestens ein stickstoffhaltiges Reduktionsmittel mit den Stickoxide enthaltenden Abgasen in Kontakt gebracht wird und/oder in den Strom der Stickoxide enthaltenden Abgasen eingebracht wird.

Auch im Rahmen der vorliegenden Erfindung ist es im Allgemeinen vorgesehen, dass das Inkontaktbringen bzw. das Einbringen des Reduktionsmittels derart erfolgt, dass das Reduktionsmittel mit den Stickoxiden reagiert, insbesondere die Stickoxide reduziert, vorzugsweise zu elementarem Stickstoff.

Darüber hinaus hat es sich bewährt, wenn das Reduktionsmittel derart ausgewählt und eingesetzt wird, dass es mit den Stickoxiden unter Komproportionierung zu elementarem Stickstoff reagiert. Durch die Komproportionierung von Stickoxiden und stickstoffhaltigem Reduktionsmittel zu elementarem Stickstoff und vorzugsweise weiteren gasförmigen Komponenten wird der Entstehung weiterer Abfälle, welche kostspielig entsorgt werden müssen, verhindert.

Im Rahmen der vorliegenden Erfindung wird es bevorzugt, wenn das Reduktionsmittel in Form einer wässrigen Lösung eingesetzt wird. In diesem Zusammenhang hat es sich bewährt, wenn Ammoniak und/oder Harnstoff, insbesondere in Form ihrer wässrigen Lösungen, als Reduktionsmittel eingesetzt werden.

Die Einbringung des Reduktionsmittels in die Stickoxide enthaltenden Abgase kann durch eine Vielzahl von technischen Maßnahmen erfolgen. Es hat sich jedoch als im Rahmen der vorliegenden Erfindung bewährt, wenn das Reduktionsmittel in feiner Verteilung in den Abgasstrom eingebracht, insbesondere eingesprüht oder eingedüst wird. Insbesondere durch Eindüsung kann eine Feinverteilung des Reduktionsmittels bei gleichzeitig hervorragender Eindringtiefe des Reduktionsmittels in den Abgasstrom bzw. Rauchgasstrom erfolgen, wodurch eine besonders effektive und wirkungsvolle Reduzierung der Stickoxide möglich wird.

Dabei hat es sich als vorteilhaft erwiesen, wenn das Reduktionsmittel mittels Eindüseinrichtungen, insbesondere Eindüslanzen, in den Abgasstrom eingebracht wird. Der zur Eindüsung benötigte Druck wird dabei üblicherweise durch Druckluft oder Dampf erzeugt.

Hierbei ist es möglich, dass jede Eindüseinrichtung eine oder mehrere, insbesondere 1 bis 20, vorzugsweise 1 bis 15, bevorzugt 1 bis 10, besonderes bevorzugt 1 bis 5, Düsen zur Einbringung des Reduktionsmittels in den Abgasstrom aufweist. Durch eine Mehrzahl von Düsen je Eindüseinrichtung wird eine besonders feine und gleichmäßige Verteilung des Reduktionsmittels im Abgasstrom erreicht.

Gleichermaßen hat es sich in dieser Hinsicht als vorteilhaft erwiesen, wenn die Eindüseinrichtungen in 1 bis 10, insbesondere 1 bis 7, vorzugsweise 1 bis 5, Eindüsebenen angeordnet sind. Durch die Anordnung der Eindüseinrichtungen in Eindüsebenen kann gewährleistet werden, dass der gesamte Reaktorquerschnitt bzw. die gesamte Breite des Rauchgasstromes von dem Reduktionsmitte bzw. den Reduktionsmitteln erfasst werden kann.

Dabei ist es möglich, dass jede Eindüsebene 1 bis 20, insbesondere 1 bis 15, vorzugsweise 1 bis 12, Eindüseinrichtungen aufweist.

Im Allgemeinen wird das Reduktionsmittel über 1 bis 200, insbesondere 2 bis 100, vorzugsweise 5 bis 60, Eindüseinrichtungen in den Rauchgasstrom eingebracht.

Im Rahmen der vorliegenden Erfindung hat es sich als besonders vorteilhaft erwiesen, wenn die Eindüseinrichtungen zur Einbringung des Reduktionsmittels einzeln und/oder gruppenweise, vorzugsweise einzeln, gesteuert werden.

Besonders gute Ergebnisse werden erzielt, wenn der Austritt des Reduktionsmittels aus den Eindüseinrichtungen für jede Eindüseinrichtung individuell und/oder für Gruppen von Eindüseinrichtungen gesteuert wird. Die einzelnen Eindüseinrichtungen sind bevorzugt individuell oder zumindest gruppenweise regelbar, da der Abgasstrom, insbesondere der Rauchgasstrom, kein homogenes Gebilde ist, sondern hinsichtlich seiner Temperatur und Zusammensetzung örtlichen und zeitlichen Schwankungen ausgesetzt ist. Des Weiteren kann im Rahmen der vorliegenden Erfindung auch ein ungleichmäßiges Temperaturprofil der Abgase eingestellt werden, welches eine unterschiedliche Zusammensetzung des Reduktionsmittels bzw. unterschiedliche Drücke und Eindringtiefen bei der Einbringung des Reduktionsmittels in den Abgasstrom erforderlich machen kann.

Um einen besonders effizienten Einsatz des Reduktionsmittels zu gewährleisten, sind die Eindüseinrichtungen daher vorteilhafterweise einzeln regelbar, d. h. die Eindüseinrichtungen können vorteilhafterweise einzeln in Betrieb genommen bzw. abgeschaltet werden, wobei auch der Druck und somit die Eindringtiefe des Reduktionsmittels in den Abgasstrom für jede Eindüseinrichtung einzeln geregelt werden kann. Besonders vorteilhaft ist es, wenn die einzelnen Eindüseinrichtungen nicht nur im Hinblick auf ihren Einsatz und den Eindüsdruck individuell geregelt werden, sondern wenn die Zusammensetzung des eingedüsten Reduktionsmittels, d. h. entweder einzelne Reduktionsmittel oder deren Mischungen, individuell und auf die jeweiligen Verhältnisse abgestimmt, gesteuert werden können.

Die vorgenannte individuelle Steuerbarkeit sämtlicher Eindüseinrichtungen im Hinblick auf ihre Betriebsparameter sowie die Zusammensetzung des Reduktionsmittels führt zwar zu den besten Ergebnissen, erhöht jedoch auch den prozesstechnischen Aufwand und somit die Kosten der Denitrifikation.

Gleichfalls sehr gute Ergebnisse - jedoch bei einem deutlich geringeren prozenttechnischen Aufwand - werden erhalten, wenn die Zusammensetzung bzw. das Mischungsverhältnis der Reduktionsmittel für sämtliche Eindüseinrichtungen gemeinsam eingestellt wird oder aber zumindest für sämtliche Eindüseinrichtungen einer Eindüsebene gemeinsam eingestellt wird, die einzelnen Eindüseinrichtungen jedoch im Hinblick auf den Eindüsdruck und die Betriebsbedingungen bzw. Betriebsverhältnisse individuell geregelt werden können.

Unter relativ gleichmäßigen und/oder erwartungsgemäßen Abgasströmen können immer noch sehr gute Ergebnisse erzielt werden, wenn die Eindüseinrichtungen gruppenweise gesteuert werden. Unter einer Gruppe von Eindüseinrichtungen ist dabei eine definierte und/oder gemeinsam ansteuerbare und/oder zusammengefasste Einheit einer Mehrzahl von Eindüseinrichtungen, insbesondere Eindüslanzen, zu verstehen.

Im Rahmen der vorliegenden Erfindung ist es im Allgemeinen vorgesehen, dass verschiedene Eindüseinrichtungen für das Kühlmittel und für die Reduktionsmittel verwendet werden, insbesondere in verschiedenen Eindüsebenen. Auf diese Weise wird im Rahmen der vorliegenden Erfindung sichergestellt, dass die Abkühlung der Abgase unabhängig von der Eindüsung bzw. Einbringung der Reduktionsmittel in den Abgasstrom erfolgt bzw. unabhängig von dieser regelbar ist.

Was den zeitlichen Ablauf des erfindungsgemäßen Verfahrens anbelangt, so hat es sich im Rahmen der vorliegenden Erfindung bewährt, wenn das Kühlmittel gleichzeitig und/oder zeitlich vorgelagert, vorzugsweise zeitlich vorgelagert, zur Einbringung des Reduktionsmittels in den Abgasstrom eingebracht wird und/oder dass das Kühlmittel und das Reduktionsmittel alternierend und/oder in festgelegter Abfolge, vorzugsweise in räumlich und/oder zeitlich, bevorzugt räumlich, festgelegter Abfolge in den Abgasstrom eingebracht wird. In diesem Zusammenhang hat es sich insbesondere als vorteilhaft erwiesen, wenn bei der erstmaligen Einbringung das Kühlmittel gleichzeitig und/oder zeitlich vorgelagert, vorzugsweise zeitlich vorgelagert, zu der Einbringung des Reduktionsmittels in den Abgasstrom eingebracht wird.

Im Rahmen der vorliegenden Erfindung ist es somit im Allgemeinen vorgesehen und bevorzugt, dass zuerst das Kühlmittel in den Abgasstrom eingebracht wird, woraufhin sich das festgelegte bzw. erwünschte Temperaturprofil im Abgasstrom einstellt. Anschließend wird dann ein auf dieses spezielle Temperaturprofil genau abgestimmtes Reduktionsmittel bzw. ein Gemisch von Reduktionsmitteln in den Abgasstrom eingedüst, wodurch optimale Ergebnisse im Hinblick auf die Stickoxid-Abscheiderate, den Ammoniak-Schlupf sowie den Verbrauch an Reduktionsmitteln erreicht werden. Alternativ kann es jedoch auch vorgesehen sein, dass die Zugabe des Reduktionsmittels gleichzeitig mit der Zugabe des Kühlmittels erfolgt, jedoch wiederum bevorzugt über jeweils separate bzw. verschiedene Eindüseinrichtungen. Auf diese Weise stellt sich das gewünschte Temperaturprofil im Beisein der Reduktionsmittel ein. Darüber hinaus ist es jedoch auch möglich, erst den Abgasstrom mit dem Kühlmittel zu versetzen und anschließend das Reduktionsmittel gleichfalls in den Abgasstrom einzubringen, wobei bei einer nicht ausreichenden Reduktionswirkung nochmals Kühlmittel und/oder Reduktionsmittel in den Abgasstrom eingebracht werden können, insbesondere nach einer nochmaligen Bestimmung des Temperaturprofils.

Was die Temperaturen bei der Einbringung des Reduktionsmittels anbelangt, so können diese in weiten Bereichen variieren. Besonders gute Ergebnisse können im Rahmen der vorliegenden Erfindung jedoch bei Temperaturen im Bereich von 750 bis 1.200 °C, insbesondere 800 bis 1.150 °C, vorzugsweise 850 bis 1.100 °C, erzielt werden. In diesen Temperaturbereichen werden insbesondere mit wässrigen Ammoniak- bzw. Harnstofflösungen besonders gute Ergebnisse erhalten.

Gleichfalls werden im Rahmen der vorliegenden Erfindung besonders gute Ergebnisse erhalten, wenn die Einbringung des Kühlmittels bzw. des Reduktionsmittels in die Abgase gezielt und flexibel steuerbar ist.

Gemäß einer erfindungsgemäß bevorzugten Ausführungsform wird bei der Einbringung des Kühlmittels in den Abgasstrom, insbesondere dessen Menge und/oder der Zeitpunkt der Einbringung, über eine Auswertung des Lastsignals und/oder die Bestimmung der Abgastemperatur gesteuert.

Hierbei kann es vorgesehen sein, dass die Einbringung des Kühlmittels in den Abgasstrom über eine Auswertung des Lastsignals und/oder über die Bestimmung der Abgastemperatur gesteuert wird.

Gemäß einer bevorzugten Ausführungsform der vorliegenden Erfindung wird die Einbringung des Reduktionsmittels in den Abgasstrom, insbesondere dessen Menge und/oder der Zeitpunkt der Einbringung, über die Bestimmung der Abgastemperatur und/oder des Stickoxidgehalts des nach der Behandlung resultierenden Reingases gesteuert.

Hierbei kann es vorgesehen sein, dass die Einbringung der Reduktionsmittel in den Abgasstrom über eine Auswertung des Lastsignals und/oder über die Bestimmung der Abgastemperatur und/oder über einen Vergleich zwischen einem gemessenen Wert für den Stickoxidrestgehalt des nach der Behandlung resultierenden Reingases einerseits und einem vorgegebenen Sollwert andererseits gesteuert wird. Darüber hinaus ist es auch möglich, dass zusätzlich noch der Ammoniak-Schlupf bestimmt und gleichfalls bei der Prozesssteuerung berücksichtigt wird.

Unter einem Lastsignal ist dabei im Rahmen der vorliegenden Erfindung die Angabe der jeweiligen Last, bei welcher eine Verbrennungseinrichtung, wie beispielsweise eine Großfeuerungsanlage, insbesondere ein Brennkessel, betrieben wird, zu verstehen. Die Last korrespondiert dabei zu der Leistung, die von der Verbrennungseinrichtung freigesetzt wird, und wird üblicherweise in Prozent angegeben, wobei die Volllast (100 %) der Leistung entspricht, für welche die Verbrennungseinrichtung bei optimaler Verbrennung und Befüllung ausgelegt ist.

Im Rahmen der vorliegenden Erfindung ist es vorgesehen, dass mindestens ein Temperaturprofil der Abgase, insbesondere in Form einer oder mehrerer Ebenen, erstellt wird, insbesondere mittels akustischer und/oder optischer Temperaturmessung, vorzugsweise akustischer Temperaturmessung. Die Bestimmung eines orts- und zeitaufgelösten Temperaturprofils einer oder mehreren Ebenen des Abgasstroms ermöglicht eine zielgerichtete Steuerung der einzelnen Eindüseinrichtungen, wodurch einerseits das Kühlmittel und/oder das Reduktionsmittel effektiv eingesetzt werden können, so dass eine effektive Reduzierung der Stickoxide stattfindet, und andererseits eine Überdosierung der Reduktionsmittel in Bezug auf die Stickoxide, welche zu einem erhöhten Ammoniak-Schlupf führen würde, vermieden werden kann. Gleichermaßen wird eine zu starke oder eine zu geringfügige Abkühlung der Abgase verhindert.

Besonders bewährt haben sich in diesem Zusammenhang Verfahren zur akustischen Temperaturmessung, insbesondere die akustische Gastemperaturmessung, mit denen über den Feuerungsraumquerschnitt bzw. den Querschnitt der Abgasbehandlungseinrichtung nahe den Eindüsstellen die wahren Gastemperaturen ermittelt und Temperaturprofile berechnet werden.

Ein erfindungsgemäß bevorzugt eingesetztes System besteht aus mechanisch und elektrisch baugleichen Sender- und Empfängereinheiten, die an den Wänden der Abgasbehandlungseinrichtung unmittelbar stromabwärts zu dem Feuerraum, insbesondere Brennkessel, angebracht sind, und einer externen Steuereinheit. Bei der Messung öffnet ein Ventil (z.B. Magnetventil) eine Druckluftleitung auf der Senderseite, wodurch akustische Signale erzeugt werden. Die Signale werden an der Sender- und Empfängerseite zeitgleich aufgezeichnet. Aus den digitalisierten Signalen kann die Schalllaufzeit ermittelt werden. Da die Wegstrecke bekannt ist, erhält man die Schallgeschwindigkeit, die in eine Temperatur, die so genannte Pfadtemperatur, umgerechnet wird. Mit mehreren, kombiniert wirkenden Sender-/ Empfängereinheiten in einer Ebene erhält man Mehrpfadkonfigurationen, mit denen die zweidimensionale Temperaturverteilung in einer Ebene unmittelbar und ohne Verzögerung ermittelt werden kann.

Des Weiteren ist es jedoch auch möglich, das Temperaturprofil auf Grundlage von numerischer Strömungsmechanik in Echtzeit (online CFD, online **C**omputational **F**luid **D**ynamics) zu berechnen.

Was die Einbringung des Kühlmittels in den Abgasstrom anbelangt, so wird im Rahmen der vorliegenden Erfindung auf Grundlage der ermittelten Temperaturwerte der Abgase und/oder des ermittelten Temperaturprofils der Abgase der Abgasstrom in Sektionen unterteilt wird, wobei den Sektionen definierte einzelne Eindüseinrichtungen zur Einbringung des Kühlmittels in den Abgasstrom und/oder definierte Gruppen von Eindüseinrichtungen zur Einbringung des Kühlmittels in den Abgasstrom zugeordnet werden. Auf diese Weise wird erreicht, dass auch bei sich ständig ändernden Abgastemperaturen die Einbringung des Kühlmittels in den Abgasstrom derart dosiert werden kann, dass stets das gewünschte Temperaturprofil der Abgase erhalten wird. Hierdurch vereinfacht sich die folgende Reduktion der Stickoxide in den Abgasen ganz erheblich.

Besonders gute Ergebnisse werden im Rahmen der vorliegenden Erfindung erhalten, wenn auf Grundlage der ermittelten Temperaturwerte der Abgase und/oder des ermittelten Temperaturprofils der Abgase der Abgasstrom in Sektionen unterteilt wird, wobei den Sektionen definierte einzelne Eindüseinrichtungen und/oder definierte Gruppen von Eindüseinrichtungen zur Einbringung des Reduktionsmittels zugeordnet werden. Hierdurch wird sichergestellt, dass das Reduktionsmittel auch bei wechselnden Abgastemperaturen an die für eine Reaktion wirkungsvollsten Stellen gelangt und die Anlage bezüglich des Stickoxidabscheidegrades, des Ammoniak-Schlupfes und des Reduktionsmittelverbrauches immer im optimalen Bereich betrieben wird.

Gemäß einer erfindungsgemäß besonders bevorzugten Ausführungsform werden die Eindüseinrichtungen zur Einbringung des Reduktionsmittels, insbesondere einzeln oder gruppenweise, auf Grundlage der ermittelten Temperaturwerte der Abgase und/oder des ermittelten Temperaturprofils der Abgase und/oder des Lastsignals und/oder eines Vergleichs zwischen einem gemessenen Wert für den Stickoxidrestgehalt des nach der Behandlung resultierenden Reingases einerseits und einem vorgegebenen Sollwert andererseits gesteuert.

In diesem Zusammenhang werden im Rahmen der vorliegenden Erfindung besonders gute Ergebnisse erhalten, wenn die Eindüseinrichtungen zur Einbringung des Kühlmittels und die Eindüseinrichtungen zur Einbringung des Reduktionsmittels gemeinsam auf Grundlage der ermittelten Temperaturwerte der Abgase und/oder des ermittelten Temperaturprofils der Abgase und/oder des Lastsignals gesteuert werden.

In diesem Zusammenhang wird es insbesondere bevorzugt, wenn die Steuerung der Eindüseinrichtungen zur Einbringung des Kühlmittels und die Steuerung der Eindüseinrichtungen zur Einbringung des Reduktionsmittels aufeinander abgestimmt werden.

Durch eine Abstimmung bzw. Vernetzung der Steuerung der Eindüseinrichtungen zur Einbringung des Kühlmittels einerseits und der Einbringung des Reduktionsmittels andererseits können im Rahmen der vorliegenden Erfindung besonders gute Ergebnisse erhalten werden, da die Zusammensetzung und Eindringtiefe des Reduktionsmittels stets optimal auf das eingestellte Temperaturprofil angepasst ist. Das Temperaturprofil ist dabei umgekehrt auch wieder abhängig von der Wahl des Reduktionsmittels bzw. der Reduktionsmittelmischung sowie dem Gehalt an Stickoxiden in den Abgasen, der sogenannten NOₓ-Fracht.

Zur Steuerung der Eindüseinrichtungen zur Einbringung des Kühlmittels ist in erster Linie allein die ermittelte Temperatur der Abgase sowie die Menge an Abgas von Bedeutung, wohingegen bei der Steuerung der Einbringung des Reduktionsmittels noch weitere Faktoren, wie beispielsweise der Gehalt an Stickoxiden in den Abgasen, eine Rolle spielen.

In diesem Zusammenhang hat es sich als vorteilhaft erwiesen, wenn die Eindüseinrichtungen zur Einbringung des Reduktionsmittels zusätzlich auf Grundlage eines Vergleichs zwischen einem gemessenen Wert für den Stickoxiderestgehalt des nach der Behandlung resultierenden Reingases einerseits und einem vorgegebenen Sollwert andererseits gesteuert werden. Hierdurch wird die Effizienz bzw. die Wirksamkeit der Abscheidung der Stickoxide aus den Abgasen stets überprüft und Unter- sowie Überdosierungen des Reduktionsmittels können verhindert oder zumindest umgehend ausgeglichen werden.

Besonders gute Ergebnisse werden im Rahmen der vorliegenden Erfindung erhalten, wenn als Reduktionsmittel mindestens zwei voneinander verschiedene stickstoffhaltige Reduktionsmittel mit den Stickoxide enthaltenden Abgasen in Kontakt gebracht werden und/oder in den Strom der Stickoxide enthaltenden Abgase eingebracht werden.

Darüber hinaus hat es sich bewährt, wenn die voneinander verschiedenen Reduktionsmittel derart ausgewählt und eingesetzt werden, dass sie mit den Stickoxiden jeweils unter Komproportionierung zu elementarem Stickstoff reagieren. Durch die Komproportionierung von Stickoxiden und stickstoffhaltigen Reduktionsmitteln zu elementarem Stickstoff und vorzugsweise weiteren gasförmigen Komponenten wird der Entstehung weiterer Abfälle, welche kostspielig entsorgt werden müssen, verhindert.

Besonders gute Ergebnisse werden im Rahmen der vorliegenden Erfindung erhalten, wenn die voneinander verschiedenen Reduktionsmittel unter voneinander verschiedenen Reaktionsbedingungen mit den Stickoxiden reagieren, insbesondere unter voneinander verschiedenen Temperaturen bzw. unter voneinander verschiedenen kinetischen und/oder thermodynamischen Bedingungen.

Die voneinander verschiedenen Reduktionsmittel unterscheiden sich somit vorzugsweise nicht nur in ihrer chemischen Zusammensetzung, sondern auch in ihren physikalischen Eigenschaften bzw. ihren bevorzugten Reaktionstemperaturen und Reaktionsgeschwindigkeiten. Auf diese Weise ist es möglich, durch gezielte Mischung der mindestens zwei unterschiedlichen Reduktionsmittel ein neuartiges Reduktionsreagens zu schaffen, welches individuell sowie flexibel an den jeweiligen Anwendungsfall angepasst werden kann. Idealerweise unterscheiden sich die eingesetzten Reduktionsmittel dabei so weit in ihren Eigenschaften, dass durch deren Mischung ein möglichst breiter optimaler Wirkungsbereich erhalten werden kann.

Was die Einbringung der Reduktionsmittel in die Stickoxide enthaltenden Abgase anbelangt, so hat es sich als vorteilhaft erwiesen, wenn mindestens ein Reduktionsmittel in Form einer wässrigen Lösung eingesetzt wird. Noch bessere Ergebnisse werden jedoch erhalten, wenn alle Reduktionsmittel in Form wässriger Lösungen eingesetzt werden. Durch die Verwendung wässriger Lösungen und die gezielte Variation der Konzentrationen an Reduktionsmitteln in den jeweiligen Lösungen kann die Eindringtiefe der Reduktionsmittel in den Rauchgasstrom gezielt gesteuert werden, wodurch eine maßgeschneiderte und effiziente Verwendung der Reduktionsmittel ermöglicht wird.

Vorzugweise werden als voneinander verschiedene Reduktionsmittel Ammoniak einerseits und Harnstoff andererseits, insbesondere in Form ihrer wässrigen Lösungen, eingesetzt.

Die Verwendung von Ammoniaklösungen besitzt den Vorteil, dass diese im großtechnischen Maßstab kostengünstig zu beziehen sind, wodurch das erfindungsgemäße Verfahren sehr kostengünstig durchführbar ist, und das Ammoniak unmittelbar aus der wässrigen Lösung verdampft und schon nahe der Reaktorwand mit den Stickoxiden reagiert. Der letztgenannte Vorteil ist jedoch auch ein Nachteil, da es sich oftmals als schwierig oder unmöglich gestaltet, mit Ammoniaklösungen eine Eindringtiefe in den Rauchgasstrom zu erzielen, welche eine effiziente Reduktion der Stickoxide erlaubt.

Harnstofflösungen besitzen hingegen den Vorteil, dass mit ihnen eine hohe Eindringtiefe in den Rauchgasstrom erreicht werden kann, da der Harnstoff erst nach Verdampfen des gesamten Wassers in NH₂-Radikale zersetzt wird und mit den Stickoxiden reagieren kann. Andererseits besteht jedoch bei Harnstofflösungen die Gefahr der Korrosion von Anlagenteilen, insbesondere bei Einsatz in der Nähe der Wärmetauscher.

Durch gezielte Kombination der beiden vorgenannten Reduktionsmittel, insbesondere an jeweils vorteilhaften Wirkorten, lassen sich aber die jeweiligen Nachteile des einzelnen Reduktionsmittels vermeiden und nur die Vorteile ausnutzen.

Sowohl Ammoniaklösungen als auch Harnstofflösungen lassen sich gut in entsprechend ausgestalteten Tanks lagern, wobei es vorgesehen sein kann, die jeweiligen Lösungen vor oder nach dem gegebenenfalls stattfindenden Mischen nochmals mit Wasser zu verdünnen.

Wenn im Rahmen der vorliegenden Erfindung Ammoniak als eines der Reduktionsmittel eingesetzt wird, wird das Ammoniak vorzugsweise in Form einer 10 bis 35 Gew.-%, insbesondere 15 bis 30 Gew.-%, vorzugsweise 20 bis 30 Gew.-%, bevorzugt etwa 25 Gew.-%, NH₃ enthaltenden, insbesondere wässrigen Lösung bereitgestellt bzw. eingesetzt.

Falls Harnstoff als eines der Reduktionsmittel zur Verminderung des Stickoxidgehalts der Abgase verwendet wird, so hat es sich im Rahmen der vorliegenden Erfindung als vorteilhaft erwiesen, wenn der Harnstoff in Form einer 10 bis 50 Gew.-%, insbesondere 20 bis 50 Gew.-%, vorzugsweise 30 bis 50 Gew.-%, bevorzugt 40 bis 45 Gew.-%, Harnstoff enthaltenden, insbesondere wässrigen Lösung bereitgestellt bzw. eingesetzt wird, bezogen auf die Lösung.

Gleichfalls kann es vorgesehen sein, dass die wässrige Harnstofflösung bzw. die wässrige ammoniakalische Lösung vor Einbringen der Lösung(en) in den Abgasstrom mit zusätzlichem Wasser versetzt werden.

Sowohl Ammoniak- als auch Harnstofflösungen sind in vorgenannten Konzentrationsbereichen kommerziell erhältlich und gut lagerbar. Die optionale zusätzliche Zugabe von weiterem Prozesswasser zu den jeweiligen Grundmischungen erlaubt ein gezieltes Einstellen der Eindringtiefe der Reduktionsmittel in das Rauchgas und ermöglicht ein exaktes Einstellen der Tröpfchengröße der in den Abgasstrom eingebrachten Lösungen der Reduktionsmittel. Hierdurch wird gleichfalls die Reaktionskinetik positiv beeinflusst.

Was die Einbringung der Reduktionsmittel in die Stickoxide enthaltenden Abgase anbelangt, kann es darüber hinaus vorgesehen sein, dass die voneinander verschiedenen Reduktionsmittel, insbesondere Ammoniak und Harnstoff, zeitlich und/oder räumlich getrennt voneinander in den Abgasstrom eingebracht werden.

Gleichermaßen kann es jedoch auch vorgesehen sein, dass die voneinander verschiedenen Reduktionsmittel gemeinsam in den Abgasstrom eingebracht werden, insbesondere nach vorheriger Mischung.

Dabei hat es sich im Rahmen einer möglichst effizienten und wirkungsvollen Reduktion der Stickoxide in den Abgasen als vorteilhaft erwiesen, wenn die voneinander verschiedenen Reduktionsmittel im Verlauf des Verfahrens sowohl zeitlich und/oder räumlich voneinander getrennt als auch nach vorheriger Mischung gemeinsam in den Rauchgasstrom eingebracht werden.

Das erfindungsgemäße Verfahren erlaubt eine äußerst flexible und an die jeweiligen Verfahrensbedingungen anpassbare Einbringung der Reduktionsmittel in den Abgasstrom, insbesondere Rauchgasstrom. Dabei ist es möglich, dass im Laufe des Verfahrens die Reduktionsmittel einzeln oder aber als Mischungen eingesetzt werden, d. h. im Laufe des Verfahrens kann zwischen der Einbringung eines einzelnen Reduktionsmittels und der Einbringung von Mischungen der Reduktionsmittel gewechselt werden. Neben dieser zeitlichen Trennung des Einbringens der Reduktionsmittels bzw. deren Mischungen ist auch eine örtlich getrennte Einbringung der Reduktionsmittel bzw. ihrer Mischungen möglich. Hierzu kann an einer Stelle des Reaktors beispielsweise ein einzelnes Reduktionsmittel eingebracht werden, während an einer anderen Stelle das andere Reduktionsmittel bzw. eine Mischung von Reduktionsmitteln eingebracht wird.

Wenn im Rahmen der vorliegenden Erfindung Ammoniak und Harnstoff als Reduktionsmittel verwendet werden, so können besonders gute Ergebnisse erhalten werden, wenn Ammoniak und Harnstoff mit einem gewichtsbezogenen Ammoniak/Harnstoff-Verhältnis von 99 : 1 bis 1 : 99, insbesondere 95 : 5 bis 5 : 95, vorzugsweise 9 : 1 bis 1 : 9, bevorzugt 7 : 1 bis 1 : 7, weiter bevorzugt 4 : 1 bis 1 : 6, noch weiter bevorzugt 2 : 1 bis 1 : 5, in den Abgasstrom eingebracht werden. Dies gilt insbesondere bei gemeinsamer Einbringung von Ammoniak und Harnstoff. In den vorgenannten Bereichen ist eine besonders hohe Effizienz in der Entstickung von Abgasen und in einer synergistischen Wirkungsweise zwischen Ammoniak einerseits und Harnstoff andererseits zu beobachten, welcher sich nicht nur in einer deutlichen Reduzierung der Stickoxide, sondern darüber hinaus auch in einem deutlich geringeren Verbrauch an Reduktionsmitteln niederschlägt.

Was die Menge der Reduktionsmittel in Bezug auf die Mengen an Stickoxiden in den Abgasen anbelangt, so kann diese in weiten Bereichen variieren. Im Rahmen der vorliegenden Erfindung werden jedoch besonders gute Ergebnisse erhalten, wenn die Reduktionsmittel, insbesondere Ammoniak und Harnstoff, in solchen Mengen in den Abgasstrom eingebracht werden, dass das molare Verhältnis, insbesondere Äquivalentverhältnis, zwischen insgesamt eingesetzten Reduktionsmitteln einerseits und zu reduzierenden Stickoxiden andererseits im Bereich von 1 : 1 bis 5 : 1, insbesondere 2 : 1 bis 4 : 1, vorzugsweise etwa 2,5 : 3,5, eingestellt wird. Das Äquivalentverhältnis bezieht sich dabei auf Ammoniakäquivalente, welche sich danach richten, in wieviele Ammoniakmoleküle bzw. NH₂-Radikale die eingesetzten stickstoffhaltigen Reduktionsmittel zerfallen. So entspricht ein Molekül Harnstoff zwei Ammoniakäquivalenten, da ein Molekül Harnstoff bei der Thermolyse in zwei NH₂-Radikale zerfällt.

Was das Verhältnis der Reduktionsmittel weiterhin anbelangt, so kann es im Rahmen der vorliegenden Erfindung vorgesehen sein, dass die gewichtsbezogenen Verhältnisse der Reduktionsmittel zueinander, insbesondere die gewichtsbezogenen Verhältnisse der Mischung der Reduktionsmittel, und/oder die Konzentrationen der wässrigen Lösungen der Reduktionsmittel für alle Eindüsebenen identisch eingestellt werden und/oder für einzelne, insbesondere jede Eindüseinrichtung und/oder für Gruppen von Eindüseinrichtungen, vorzugsweise für jede Eindüseinrichtung individuell eingestellt werden.

Das erfindungsgemäße Verfahren, wie es zuvor geschildert ist, ermöglicht eine gegenüber Verfahren des Standes der Technik deutlich verbesserte Reduktion der Stickoxide in Abgasen bei gleichzeitiger Verminderung der eingesetzten Mengen an Reduktionsmitteln.

Weiterer Gegenstand der vorliegenden Erfindung - gemäß einem **zweiten** Aspekt der vorliegenden Erfindung - ist eine Vorrichtung (Anlage) zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts mittels chemischer Reduktion der Stickoxide, insbesondere eine Vorrichtung (Anlage) zur Entstickung von Abgasen aus großtechnischen Anlagen, vorzugsweise zur Durchführung eines Verfahrens wie zuvor beschrieben, wobei die Vorrichtung umfasst:
(a) einen Reaktor zum Inkontaktbringen mindestens eines Kühlmittels und zum Inkontaktbringen und/oder zur Umsetzung mindestens eines Reduktionsmittels mit den Stickoxide enthaltenden Abgasen, wobei der Reaktor eine Mehrzahl von Eindüseinrichtungen zur Einbringung von mindestens einem Kühlmittel sowie eine Mehrzahl von Eindüseinrichtungen zur Einbringung von mindestens einem stickstoffhaltigen Reduktionsmittel aufweist, wobei die Eindüseinrichtungen einzeln und/oder gruppenweise, vorzugsweise einzeln, regelbar sind,
(b) mindestens eine, insbesondere dem Reaktor (2) zugeordnete, vorzugsweise über mindestens eine Zuführleitung (8A) mit den Eindüseinrichtungen (3A, 3B) verbundene, Bevorratungseinrichtung (8), insbesondere ein Vorratsgefäß, zur Bevorratung und/oder Abgabe mindestens eines Kühlmittels (4),
(c) mindestens eine, insbesondere dem Reaktor (2) zugeordnete, vorzugsweise über mindestens eine Zuführleitung (9A, 10A) mit den Eindüseinrichtungen (5) verbundene, Bevorratungseinrichtung (9, 10), insbesondere ein Vorratsgefäß, zur Bevorratung und/oder Abgabe mindestens eines Reduktionsmittels (6, 7),
(d) eine Messeinrichtung (16) zur Erstellung eines Temperaturprofils der Abgase und
(e) Mittel zur Steuerung der Einbringung des Kühlmittels (4) in den Abgasstrom, wobei auf Grundlage des ermittelten Temperaturprofils der Abgase der Abgasstrom in Sektionen unterteilt wird, wobei den Sektionen definierte einzelne Eindüseinrichtungen (3A, 3B) zur Einbringung des Kühlmittels (4) in den Abgasstrom und/oder definierte Gruppen von Eindüseinrichtungen (3A, 3B) zur Einbringung des Kühlmittels in den Abgasstrom (4) zugeordnet werden, wobei die Mittel zur Steuerung vorbereitet sind, um die Eindüseinrichtungen (3A, 3B) zur Einbringung des Kühlmittels (4) in den Abgasstrom, einzeln oder gruppenweise, auf Grundlage des ermittelten Temperaturprofils der Abgase und gegebenenfalls eines Lastsignals derart zu steuern, dass durch die Einbringung des Kühlmittels (4) in den Abgasstrom ein gewünschtes Temperaturprofil eingestellt wird, wobei der Abgasstrom durch die Einbringung des Kühlmittels (4) zumindest bereichsweise auf Temperaturen im Bereich von 750 bis 1200 °C eingestellt wird.

Wie zuvor im Zusammenhang mit dem erfindungsgemäßen Verfahren erläutert, kann der Auslass des Kühlmittels aus den Eindüseinrichtungen für jede Eindüseinrichtung individuell und/oder für Gruppen von Eindüseinrichtungen regelbar sein.

In diesem Zusammenhang hat es sich als vorteilhaft erwiesen, wenn jede Eindüseinrichtung zur Einbringung des Kühlmittels in den Abgasstrom eine oder mehrere, insbesondere 1 bis 20, vorzugsweise 1 bis 15, bevorzugt 1 bis 10, besonderes bevorzugt 1 bis 5, Düsen aufweist.

Gemäß einer erfindungsgemäßen bevorzugten Ausführungsform sind die Eindüseinrichtungen zur Einbringung des Kühlmittels in den Abgasstrom in 1 bis 10, insbesondere 1 bis 7, vorzugsweise 1 bis 5, bevorzugt 1 bis 3, Eindüsebenen, besonders bevorzugt einer Eindüsebene, angeordnet sind. In diesem Zusammenhang hat es sich bewährt, wenn jede Eindüsebene 1 bis 20, insbesondere 1 bis 15, vorzugsweise 1 bis 12, Eindüseinrichtungen zur Einbringung des Kühlmittels in den Abgasstrom aufweist. Auf diese Weise wird eine besonders effiziente und wirksame Abkühlung des Abgasstroms erreicht.

Im Allgemeinen ist es Rahmen der vorliegenden Erfindung vorgesehen, dass die Vorrichtung 1 bis 200, insbesondere 2 bis 100, vorzugsweise 5 bis 60, bevorzugt 3 bis 36, besonders bevorzugt 1 bis 12, Eindüseinrichtungen zur Einbringung des Kühlmittels in den Abgasstrom aufweist.

Darüber hinaus wird es im vorliegenden Erfindung bevorzugt, wenn der Auslass des Reduktionsmittels aus den Eindüseinrichtungen für jede Eindüseinrichtung individuell und/oder für Gruppen von Eindüseinrichtungen regelbar ist.

Gleichfalls kann es vorgesehen sein, dass jede Eindüseinrichtung zur Einbringung des Reduktionsmittels in den Abgasstrom eine oder mehrere, insbesondere 1 bis 20, vorzugsweise 1 bis 15, bevorzugt 1 bis 10, besonderes bevorzugt 1 bis 5, Düsen aufweist.

In diesem Zusammenhang hat es sich bewährt, wenn die Vorrichtung 1 bis 200, insbesondere 2 bis 100, vorzugsweise 5 bis 60, Eindüseinrichtungen zur Einbringung des Reduktionsmittels in den Abgasstrom aufweist.

Gemäß einer bevorzugten Ausführungsform der vorliegenden Erfindung sind die Eindüseinrichtungen zur Einbringung Reduktionsmittels in den Abgasstrom in 1 bis 10, insbesondere 1 bis 7, vorzugsweise 1 bis 5, Eindüsebenen angeordnet.

Hierbei kann es insbesondere vorgesehen sein, dass jede Eindüsebene 1 bis 20, insbesondere 1 bis 15, vorzugsweise 1 bis 12, Eindüseinrichtungen zur Einbringung des Reduktionsmittels in den Abgasstrom aufweist.

Weiterhin wird es im Rahmen der vorliegenden Erfindung bevorzugt, wenn die Eindüseinrichtungen zur Einbringung, insbesondere Einsprühung, vorzugsweise Eindüsung, wässriger Lösungen des Reduktionsmittels, insbesondere wässriger Ammoniak- und/oder Harnstofflösungen, ausgebildet sind.

In diesem Zusammenhang hat es sich als vorteilhaft erwiesen, wenn die Vorrichtung umfasst:
(c1) mindestens eine erste, insbesondere dem Reaktor zugeordnete, vorzugsweise über mindestens eine Zuführleitung mit den Eindüseinrichtungen verbundene, Bevorratungseinrichtung, insbesondere ein erstes Vorratsgefäß, zur Bevorratung und/oder Abgabe mindestens eines ersten Reduktionsmittels und
(c2) mindestens eine zweite, insbesondere dem Reaktor zugeordnete, vorzugsweise über mindestens eine Zuführleitung mit den Eindüseinrichtungen verbundene, Bevorratungseinrichtung, insbesondere ein zweites Vorratsgefäß, zur Bevorratung und/oder Abgabe mindestens eines von dem ersten Reduktionsmittel verschiedenen zweiten Reduktionsmittels.

Im Allgemeinen ist es im Rahmen der vorliegenden Erfindung vorgesehen dass die Vorrichtung einer Verbrennungseinrichtung, insbesondere einem Brennkessel, nachgeschaltet, insbesondere unmittelbar nachgeschaltet, ist.

Als besonders vorteilhaft hat es sich in diesem Zusammenhang erwiesen, wenn die Vorrichtung zwischen einer Verbrennungseinrichtung und einer Wämeaustauscheinrichtung angeordnet ist. Auf diese Weise können die besten Abscheideraten bei der Entfernung bzw. Abscheidung der Stickoxide bei gleichzeitig geringen Verbrauch an Reduktionsmittel sowie geringem Ammoniak-Schlupf erhalten werden.

Alternativ kann es jedoch auch vorgesehen sein, dass die Vorrichtung einer Verbrennungseinrichtung, insbesondere einem Brennkessel, nachgeschaltet, ist und sich bis in den Bereich einer Wärmeaustauscheinrichtung erstreckt. Insbesondere wenn bereits bestehende Brennkessel bzw. Heizkessel mit der erfindungsgemäßen Vorrichtung ausgerüstet werden, kann es sich aufgrund der Temperaturverteilung sowie der konstruktiven Gegebenheiten ergeben, dass sich die erfindungsgemäße Vorrichtung, insbesondere die Eindüslanzen, im Bereich der Wärmeaustauscheinrichtungen bzw. der Heizflächen der Anlage, bzw. der Großfeuerungsanlage, befinden.

Gleichfalls hat es sich im Rahmen der vorliegenden Erfindung als vorteilhaft erwiesen, die Vorrichtung mindestens eine Wasserbevorratungseinrichtung zur Bevorratung und/oder Abgabe von Wasser aufweist.

Hierbei kann es insbesondere vorgesehen sein, dass die Wasserbevorratungseinrichtung dem Reaktor zugeordnet ist, vorzugsweise über mindestens eine Zuführleitung mit den Eindüseinrichtungen zur Einbringung des Reduktionsmittels verbunden ist. Das Wasser wird im Rahmen der erfindungsgemäßen Verfahrensführung insbesondere benötigt, um die speziellen Konzentrationsverhältnisse des Reduktionsmittels vor der Eindüsung bzw. Einbringung in die erfindungsgemäße Vorrichtung exakt einzustellen. Da Wasser im Rahmen der vorliegenden Erfindung auch als bevorzugtes Kühlmittel verwendet wird, ist in diesem Fall nur ein Bevorratungsgefäß sowohl für die Bevorratung des Kühlmittels als auch zur Herstellung bzw. Abmischung des Reduktionsmittels notwendig.

Weiterhin ist es im Rahmen der vorliegenden Erfindung im Allgemeinen vorgesehen, dass die Vorrichtung mindestens eine Gasbevorratungseinrichtung zur Bevorratung und/oder Abgabe von gegebenenfalls komprimierten Gasen, insbesondere von Druckluft, aufweist. Hierbei kann es vorgesehen sein, dass die Gasbevorratungseinrichtung dem Reaktor zugeordnet ist, vorzugsweise über mindestens eine Zuführleitung mit den Eindüseinrichtungen zur Einbringung des Kühlmittels in den Abgasstrom verbunden ist. Alternativ kann es jedoch auch vorgesehen sein, dass die Vorrichtung mindestens eine Gasbevorratungseinrichtung zur Bevorratung und/oder Abgabe von gegebenenfalls komprimierten Gasen, insbesondere von Druckluft, aufweist.

Hierbei hat es sich als vorteilhaft erwiesen, wenn die Gasbevorratungseinrichtung dem Reaktor zugeordnet ist, vorzugsweise über mindestens eine Zuführleitung mit den Eindüseinrichtungen zur Einbringung des Reduktionsmittels in den Abgasstrom verbunden ist.

Gleichfalls ist es im Allgemeinen gemäß der vorliegenden Erfindung vorgesehen, dass die Druckbeaufschlagung der Eindüseinrichtungen zum Austragen der Kühlmittels in den Reaktor mittels der in der Gasbevorratungseinrichtung bevorrateten Gase durchführbar ist und/oder dass die Druckbeaufschlagung der Eindüseinrichtungen zum Austragen des Reduktionsmittels in den Reaktor mittels der in der Gasbevorratungseinrichtung bevorrateten Gase durchführbar ist.

Im Rahmen der vorliegenden Erfindung kann es jedoch auch vorgesehen sein, dass unterschiedliche Gasbevorratungseinrichtungen bzw. jeweils getrennte Gasbevorratungseinrichtungen zum Austragen des Kühlmittels und zum Austragen des Reduktionsmittels verwendet werden. Dies hat keine Auswirkung auf die Wirkungsweise der erfindungsgemäßen Vorrichtung, sondern ist allein den konstruktiven Gegebenheiten geschuldet. Gleichfalls können auch dieselbe oder getrennte Steuereinheiten zur Steuerung der Druckbeaufschlagung zum Austragen des Kühlmittels sowie zum Austragen des Reduktionsmittels verwendet werden.

Als besonders vorteilhaft hat es sich im Rahmen der vorliegenden Erfindung erwiesen, wenn die Vorrichtung mindestens eine Dosier- und/oder Mischeinrichtung aufweist.

In diesem Zusammenhang kann es vorgesehen sein, dass die Dosier- und/oder Mischeinrichtung mit den Bevorratungseinrichtungen zur Bereitstellung des Reduktionsmittels und mit den Eindüseinrichtungen zur Bereitstellung des Reduktionsmittels und mit den Eindüseinrichtungen zur Einbringung des Reduktionsmittels in den Abgasstrom und mit der gegebenenfalls vorhandenen Wasserbevorratungseinrichtung verbunden ist.

Weiterhin kann es vorgesehen sein, dass die Dosier- und Mischeinrichtung derart ausgebildet ist, dass die Konzentrationen der wässrigen Lösungen des Reduktionsmittels identisch regelbar sind und/oder für einzelne, insbesondere für jede Eindüseinrichtung zur Einbringung des Reduktionsmittels in den Abgasstrom und/oder für Gruppen von Eindüseinrichtungen zur Einbringung des Reduktionsmittels in den Abgasstrom, vorzugsweise für jede Eindüseinrichtung zur Einbringung des Reduktionsmittels in den Abgasstrom, individuell regelbar sind.

Darüber hinaus hat es sich als vorteilhaft erwiesen, wenn die Dosier- und/oder Mischeinrichtung derart ausgebildet ist, dass die Gewichts- und/oder Volumenverhältnisse der Reduktionsmittel zueinander, insbesondere die Gewichts- und/oder Volumenverhältnisse von Mischungen der Reduktionsmittel, und/oder die Konzentrationen der wässrigen Lösungen der Reduktionsmittel identisch regelbar sind und/oder für einzelne, insbesondere für jede Eindüseinrichtung zur Einbringung des Reduktionsmittels in den Abgasstrom und/oder für Gruppen von Eindüseinrichtungen zur Einbringung des Reduktionsmittels in den Abgasstrom, vorzugsweise für jede Eindüseinrichtung zur Einbringung des Reduktionsmittels in den Abgasstrom, individuell regelbar sind.

Erfindungsgemäß ist es vorgesehen, dass die Einbringung des Kühlmittels in den Abgasstrom über eine Ermittlung von Temperaturwerten der Abgase und/oder über eine Ermittlung eines Temperaturprofils der Abgase und/oder über ein Lastsignal steuerbar ist. Gleichfalls ist es erfindungsgemäß vorgesehen, dass die Einbringung des Reduktionsmittels in den Abgasstrom über eine Ermittlung von Temperaturwerten der Abgase und/oder über eine Ermittlung eines Temperaturprofils der Abgase und/oder über ein Lastsignal und/oder über einen Vergleich zwischen einem gemessenen Wert für den Stickoxidrestgehalt des nach der Behandlung resultierenden Reingases einerseits und einem vorgegebenen Sollwert andererseits steuerbar ist.

Besonders gute Ergebnisse werden im Rahmen der vorliegenden Erfindung erzielt, wenn die Einbringung des Kühlmittels und die Einbringung des Reduktionsmittels in den Abgasstrom aufeinander abstimmbar ist. Hierdurch können im Rahmen der vorliegenden Erfindung, insbesondere im Rahmen der erfindungsgemäßen Verfahrensführung besondere Synergieeffekte erzielt werden, insbesondere im Hinblick auf eine besonders hohe Abscheiderate der Stickoxide aus den zu reinigenden Abgasen sowie eine deutliche Reduzierung des Reduktionsmittelverbrauchs und des Ammoniak-Schlupfes.

Erfindungsgemäß ist es vorgesehen, dass durch die Eintragung des Kühlmittels in den Abgasstrom ein Temperaturprofil des Abgasstroms einstellbar ist.

Hierbei kann es insbesondere vorgesehen sein, dass ein gleichmäßiges Temperaturprofil oder ein ungleichmäßiges Temperaturprofil des Abgasstroms einstellbar ist.

Was diesen Aspekt der erfindungsgemäßen Vorrichtung weiterhin anbelangt, so ist es vorgesehen, dass der Abgasstrom durch die Einbringung des Kühlmittels - insbesondere zumindest bereichsweise - auf Temperaturen im Bereich von 750 bis 1.200 °C, insbesondere 800 bis 1.150 °C, vorzugsweise 850 bis 1.100 °C, einstellbar ist. In diesem Temperaturbereich ist eine äußerst effektive Reduktion der in den Abgasen enthaltenden Stickoxide möglich.

Gemäß einer besonders bevorzugten Ausführungsform der vorliegenden Erfindung ist es vorgesehen, dass die Vorrichtung mindestens eine Messeinrichtung zur Ermittlung von Temperaturwerten der Abgase und/oder zur Ermittlung eines Temperaturprofils der Abgase und/oder zur Ermittlung eines Lastsignals und/oder zur Ermittlung eines Wertes für den Stickoxidrestgehalt des nach der Behandlung resultierenden Reingases, insbesondere zu Zwecken der Steuerung der Einbringung des Kühlmittels und/oder des Reduktionsmittels in den Abgasstrom, aufweist.

In diesem Zusammenhang hat es sich im Rahmen der vorliegenden Erfindung bewährt, wenn die Vorrichtung, insbesondere stromaufwärts zu den Eindüseinrichtungen zur Einbringung des Kühlmittels angeordnet, eine Messeinrichtung zur Bestimmung der Temperatur des Abgases und/oder zur Erstellung eines Temperaturprofils des Abgases, insbesondere mittels akustischer oder optischer Temperaturmessung, vorzugsweise mittels akustischer Temperaturmessung, aufweist. Weitere Messeinrichtungen können zur Kontrolle darüber hinaus vorgesehen sein.

Auch in diesem Zusammenhang kann es vorgesehen sein, dass die Temperatur im Verlaufe des Verfahrens bzw. während des Durchflusses der Rauchgase bzw. Abgase durch die Vorrichtung mehrmals bestimmt wird.

Für weitere Einzelheiten zu der erfindungsgemäßen Vorrichtung bzw. Anlage kann auf die obigen Ausführungen zu dem erfindungsgemäßen Verfahren verwiesen werden, welche in Bezug auf die erfindungsgemäße Vorrichtung bzw. Anlage entsprechend gelten.

Weiterer Gegenstand der vorliegenden Erfindung - gemäß einem **dritten** Aspekt der vorliegenden Erfindung - ist die Verwendung einer Vorrichtung wie zuvor beschrieben zur Entfernung und/oder Abscheidung von Stickoxiden aus Stickoxide enthaltenden Abgasen technischer Prozesse, insbesondere Rauchgasen.

Für weitere Einzelheiten zu diesem Erfindungsaspekt kann auf die obigen Ausführungen zu dem erfindungsgemäßen Verfahren bzw. zu der erfindungsgemäßen Vorrichtung verwiesen werden, welche im Bezug auf die erfindungsgemäße Verwendung entsprechend gelten.

Darüber hinaus ist weiterer Gegenstand der vorliegenden Erfindung - gemäß **vierten** Aspekt der vorliegenden Erfindung - die Verwendung einer Vorrichtung wie zuvor beschrieben zur selektiven Abkühlung von Abgasen aus technischen Prozessen, insbesondere Rauchgasen.

Für weitergehende Einzelheiten zu diesem Erfindungsaspekt kann auf die obigen Ausführungen zu den weiteren Erfindungsaspekten verwiesen werden, welche im Bezug auf die erfindungsgemäße Verwendung entsprechend gelten.

Das erfindungsgemäße Verfahren und die erfindungsgemäße Vorrichtung bzw. Anlage zur Behandlung von Stickoxide enthaltenden Abgasen aus technischen Prozessen sind in der beigefügten Figurendarstellung beispielhaft und in nicht beschränkender Weise veranschaulicht.

Weitere Vorteile, Eigenschaften, Aspekte und Merkmale der vorliegenden Erfindung ergeben sich aus den folgenden Beschreibungen von in der Zeichnung dargestellten, erfindungsgemäß bevorzugten Ausführungsformen.

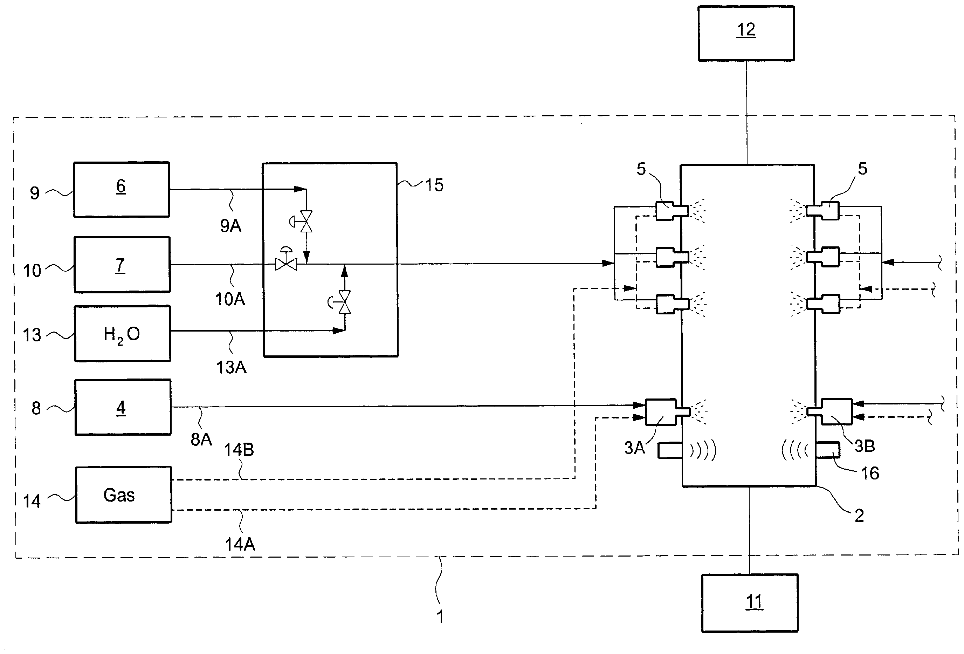

Es zeigt die einzige Figurendarstellung (Fig. 1) eine schematische Darstellung der erfindungsgemäßen Vorrichtung 1 zur Durchführung eines Verfahrens nach der Erfindung.

Die Figur zeigt einen Reaktor 2 zur Durchführung des erfindungsgemäßen Verfahrens zur Behandlung von Stickoxide enthaltenden Abgasen aus technischen Prozessen, wie Rauchgasen. Die erfindungsgemäße Vorrichtung ist üblicherweise einem Brennkessel 11, beispielsweise dem Brennkessel einer Großfeuerungsanlage, wie einem Heizkraftwerk oder einer Abfallverbrennungsanlage, nachgeschaltet und befindet sich unmittelbar stromaufwärts zu den Wärmetauschern bzw. Heizflächen 12, in welchen den Rauchgasen die Wärmeenergie entzogen und der weiteren Verwertung zugeführt wird.

Der Reaktor weist eine Mehrzahl von Eindüseinrichtungen 3A und 3B zur Eindüsung eines Kühlmittels in den Reaktor 2 auf. Die Eindüseinrichtungen 3A bzw. 3B sind vorzugsweise in einer Ebene angeordnet, wobei die Bezeichnung 3A bzw. 3B lediglich verdeutlichen soll, dass die Eindüseinrichtungen vorzugsweise einzeln steuerbar ausgebildet sind, um eine bereichsweise Abkühlung der Abgase bzw. die Einstellung eines festgelegten Temperaturprofils der Rauchgase zu ermöglichen.

Darüber hinaus weist der Reaktor 2 ein System zur akustischen Gastemperaturmessung 16 auf, welches unmittelbar stromaufwärts zu den Eindüseinrichtungen 3A/3B zur Eindüsung des Kühlmittels in den Abgasstrom angeordnet ist.

Alternativ kann die Temperaturmessung auch nach einer ersten Eindüsebene für das Kühlmittel erfolgen, wobei in diesem Fall vorzugsweise mindestens eine weitere Eindüsebenen zur Einbringung des Kühlmittels in den Reaktor 2 vorgesehen ist. Gleichfalls ist es auch möglich, die Temperatur über mehrere Systeme zur akustischen Gastemperaturmessung 16 zu ermitteln.

Auf Grundlage des durch die Temperaturmessung ermittelten Temperaturprofils des Abgasstroms können die Abgase durch Eindüsung des Kühlmittels selektiv gekühlt werden und eine ideale Zusammensetzung des Reduktionsmittels sowie die Eindringtiefe bzw. der Eindüsdruck und die Tröpfchengröße bzw. das Tröpfchenspektrum können gezielt eingestellt werden. Der Reaktor 2 verfügt weiterhin über eine Vielzahl von Eindüseinrichtungen 5, welche in der Figurendarstellung zur Verdeutlichen in drei Eindüsebenen angeordnet sind. Durch die Eindüseinrichtungen 5 wird das Reduktionsmittel in den Reaktor 2 eingebracht. Vorzugsweise wird über die Eindüseinrichtungen 5 ein Gemisch von verschiedenen Reduktionsmitteln in den Reaktor 2 eingedüst.

Die Eindüseinrichtungen 3A/3B zur Eindüsung des Kühlmittels sind über eine Zuführleitung 8A mit einem Bevorratungsgefäß 8 für das Kühlmittel verbunden. Weiterhin sind die Eindüseinrichtungen 3A/3B über eine Zuführleitung 14A mit einem Bevorratungsgefäß 14 zur Abgabe von Druckluft verbunden. Die Eindüseinrichtungen 5 zur Eindüsung des Reduktionsmittels sind über eine Zuführleitung 14B mit einem Bevorratungsgefäß 14 für Druckluft verbunden.

Darüber hinaus sind die Eindüseinrichtungen 5 mit einer Mischvorrichtung 15 verbunden, welche über die Versorgungsleitungen 9A bzw. 10A an die Vorratsgefäße 9 bzw. 7 angeschlossen ist, welche die Reduktionsmittel 6 (Ammoniak) und 7 (Harnstoff) in Form ihrer wässrigen Lösungen enthalten. Weiterhin ist die Mischeinrichtung 15 über eine Zuführleitung 13A mit einem Bevorratungsgefäß 13 für Wasser verbunden.

Alternativ kann es jedoch auch vorgesehen sein, dass bei der Verwendung von Wasser als Kühlmittel anstelle der beiden Bevorratungsgefäße 8 und 13 nur ein gemeinsames Bevorratungsgefäß für Wasser bereitgestellt wird.

Weiterhin kann es gemäß einer weiteren Alternative vorgesehen sein, dass das Bevorratungsgefäß 8 über die Zuführleitung 8A gleichfalls mit der Mischeinrichtung 15 verbunden ist.

Gleiches gilt auch für das Bevorratungsgefäß für Druckluft 14, welches gemäß einer Alternative über die Zuführleitungen 14A und 14B mit der Mischeinrichtung 15 verbunden sein kann, wobei es in diesem Fall auch vorgesehen sein kann, dass bis zur Mischvorrichtung 15 nur eine einzige Zuführleitung für Druckluft vorgesehen ist und zwei Druckluftleitungen aus der Mischvorrichtung 15 zu den Eindüseinrichtungen 3A/3B und 5 führen.

Abweichend von der Figurendarstellung kann die Mischeinrichtung 15 bevorzugt nicht nur über eine Versorgungsleitung mit den Eindüslanzen 5 verbunden sein, sondern über mehrere, insbesondere ist zumindest jede Eindüsebene von Eindüslanzen 5 über mindestens eine eigene Versorgungsleitung mit der Mischeinrichtung 15 verbunden. Aus Gründen der Übersichtlichkeit wurde in der Figurendarstellung jedoch auf die Abbildung einer Mehrzahl von Versorgungsleitungen verzichtet.

Das Gleiche gilt auch für den Fall, dass mehrere Eindüsebenen von Eindüseinrichtungen 3A/3B zur Eindüsung des Kühlmittels vorgesehen sind. Auch können die einzelnen Eindüseinrichtungen 3A/3B über mehrere Versorgungsleitungen mit den Bevorratungseinrichtungen für die Druckluft und für das Kühlmittel verbunden sein.

Im Rahmen des erfindungsgemäßen Verfahrens wird nun bevorzugt derart vorgegangen, dass auf Grundlage eines mittels akustischer Gastemperaturmessung ermittelten Temperaturprofils des Rauchgases mit Hilfe der Messeinrichtungen 16 und aufgrund des Lastsignals des Brennkessels Wasser als Kühlmittel unter Druckbeaufschlagung durch die Eindüseinrichtungen 3A/3B in den Reaktor eingedüst wird, wodurch ein vorher festgelegtes Temperaturprofil, insbesondere eine einheitliche Temperaturverteilung, der Rauchgase erreicht wird.

Weiterhin wird aufgrund des Lastsignals des Brennkessels eine Grundeinstellung für die Dosierung bzw. Zugabe des Reduktionsmittels in den Reaktor 2 ausgewählt.

Auf Grundlage des mittels akustischer Gastemperaturmessung ermittelten Temperaturprofils des Rauchgasstroms mit Hilfe der Messeinrichtungen 16 und des durch die Eindüsung des Kühlmittels Wasser eingestellten Temperaturprofils des Rauchgasstroms werden in der Mischeinrichtung 15 die Verhältnisse von Ammoniaklösungen und Harnstofflösungen zueinander eingestellt und durch Zugabe von Prozesswasser die Konzentration der Reduktionsmittel bei Zugabe in den Reaktor bestimmt.

Da durch die Zugabe von Wasser als Kühlmittels mittels der Eindüseinrichtung 3A/3B ein vorher festgelegtes Temperaturprofil der Abgase im Reaktor 2 erreicht wird, kann das spezielle Mischungsverhältnis der Reduktionsmittel aus einer Auswahl festgelegter Mischungsverhältnisse ausgewählt werden und über einen längeren Zeitraum beibehalten beibehalten werden.

Alternativ zu dem in der Figurendarstellung dargestellten Schema ist es auch möglich, die jeweiligen Verhältnisse von Ammoniaklösungen zu Harnstoff sowie die Gesamtkonzentration der Reduktionsmittel in der Lösung, welche in den Reaktor eingedüst wird, individuell für jede Eindüseinrichtung einzustellen. Erfindungsgemäß bevorzugt wird es jedoch, wenn aufgrund des durch die Kühlung eingestellten Temperaturprofils mit bereits vorher festgelegten, konstanten Parametern für die Eindüsung der Reduktionsmittel gearbeitet werden kann.

Durch die Zuführleitung 14A und 14B wird dann Druckluft zu den jeweiligen Eindüslanzen geführt, wodurch der jeweilige Austrittsdruck und somit die gezielte Eindringtiefe und Tröpfchengröße des Kühlmittels sowie der Reduktionsmittellösung gezielt eingestellt werden. Alternativ ist es jedoch auch in diesem Fall möglich, die Druckluftregelung gleichfalls über eine Misch- und Dosiereinrichtung zusammen mit der jeweiligen Mischung der Reduktionsmittel bestimmen zu lassen.

Weitere Ausgestaltungen, Abwandlungen, Variationen und Besonderheiten der vorliegenden Erfindung sind für den Fachmann beim Lesen der Beschreibung ohne Weiteres erkennbar und realisierbar, ohne dass der Rahmen der vorliegenden Erfindung verlassen wird.

Die vorliegende Erfindung wird anhand der folgenden Ausführungsbeispiele veranschaulicht, ohne jedoch die vorliegende Erfindung hierauf zu beschränken.

### Ausführungsbeispiele:

Zur Verdeutlichung der Wirksamkeit des erfindungsgemäßen Verfahrens sowie der erfindungsgemäßen Vorrichtung wird der Gegenstand der vorliegenden Erfindung anhand der folgenden Ausführungsbeispiele exemplarisch verdeutlicht. Das Verfahren wird erfindungsgemäß in einer Vorrichtung betrieben, wie sie schematisch und exemplarisch in der einzigen Figurendarstellung veranschaulicht ist.

Das erfindungsgemäße Verfahren zur Reduzierung von Stickoxiden aus Rauchgasen wird an einem mit Steinkohle gefeuerten Kessel des Standes der Technik bei Volllast (225 MWₑₗ) demonstriert. Die Rauchgase weisen beim Verlassen des Brennkessels eine Temperaturschieflage von 120 °C auf. Zwischen dem Kessel und den Wärmetauschern der Anlage ist eine erfindungsgemäße Vorrichtung zur Reduzierung des Stickoxidgehalts von Rauchgasen angebracht. Die erfindungsgemäße Vorrichtung besteht aus einem Reaktionsraum, in welchen über zehn Eindüslanzen, welche in einer Eindüsebene angebracht sind, Wasser als Kühlmittel eingedüst wird. Unmittelbar stromaufwärts zu dieser Eindüsebene ist ein akustisches Temperaturmesssystem angebracht, welches es ermöglicht, ein Temperaturprofil des Rauchgasstroms zu erstellen und auf diese Weise die Eindüslanzen zu steuern.

Stromabwärts zu dieser Eindüsebene werden über 36 Eindüslanzen, verteilt auf 3 Eindüsebenen mit jeweils 12 Eindüslanzen, Ammoniakwasser (25 Gew.-% NH₃, bezogen auf das Ammoniakwasser), Harnstofflösung (40 Gew.-% Harnstoff, bezogen auf die Lösung) und Gemische der beiden Flüssigkeiten eingedüst.

Jeweils zu Beginn des Verfahrens bzw. in regelmäßigen Abständen während der Verfahrensdauer wird die Stickoxidbelastung des Rohgases, d. h. des noch nicht behandelten Abgases, gemessen, um auf diese Weise in Kombination mit Lastsignalen eine Grobeinstellung der Abgasbehandlungseinrichtung, insbesondere bezüglich der Eindüsung der Reduktionsmittel, zu ermöglichen.

Während der gesamten weiteren Verfahrensdauer werden die Stickoxidbelastungen der behandelten Abgase (d. h. der Reingase) sowie der Ammoniak-Schlupf bestimmt, wodurch eine Feinabstimmung des erfindungsgemäßen Verfahrens bzw. der erfindungsgemäßen Vorrichtung ermöglicht wird.

Es werden mehrere Versuchsreihen durchgeführt: Zuerst werden drei nichterfindungsgemäße Verfahren durchgeführt, welche auf dem Einsatz von Ammoniaklösungen oder von Harnstofflösungen oder deren Mischungen beruhen, jedoch ohne vorhergehende Abkühlung der Abgase.

Anschließend werden Verfahrensdurchläufe nach dem erfindungsgemäßen Verfahren durchgeführt, welche auf einer vorherigen Abkühlung und der Einstellung eines vorher festgelegten Temperaturprofils der Abgase beruhen. In keiner der Versuchsreihen werden die wässrigen Lösungen der Reduktionsmittel mit zusätzlichem Wasser versetzt. Die Ergebnisse der Verfahrensdurchläufe sind in Tabelle 1 zusammengefasst.

Wie sich anhand der Daten aus Tabelle 1 ersehen lässt, liefern sowohl die alleinige Eindüsung von Harnstoff als auch die alleinige Eindüsung von Ammoniaklösung ohne vorherige Abkühlung der Rauchgase eine Reduzierung des Stickoxidgehalts der Abgase, welche nicht den aktuellen gesetzlichen Grenzwerten entspricht. Geschuldet ist dies insbesondere der Tatsache, dass der Kessel eine erhebliche Temperaturschieflage aufweist und der für eine optimale Reduktion günstige Temperaturbereich bei Volllast im Bereich der Wärmetauscher liegt, welcher teilweise schwierig mittels der Eindüseinrichtungen zu erreichen ist. Durch Eindüsung der Reduktionsmittel in zu heiße Bereiche des Abgasstroms wird darüber hinaus eine Oxidation der eingebrachten Reduktionsmittel zu Stickoxiden gefördert. In Reaktion hierauf wird die eingedüste Menge an Reduktionsmittel erhöht, was dann wiederum zu einem erhöhten Ammoniak-Schlupf und somit zu einer bedenklichen Belastung der Flugasche mit Ammoniak- bzw. Ammoniumsalzen führt.

Die alleinige Verwendung von Harnstoff resultiert im Gegensatz zur Verwendung von Ammoniak in einem deutlich verbesserten, da reduzierten Ammoniak-Schlupf, führt jedoch zu einer merklichen Korrosion an den Wärmetauschern, da insbesondere bei hohen Lasten des Kessels eine Eindüsung im Bereich der Wärmetauscher notwendig wird, um den Stickoxidgehalt der Rauchgase auf das gewünschte Maß zu senken. Von den nichterfindungsgemäßen Verfahren bringt allein eine gemeinsame Eindüsung von Ammoniak und Harnstoff, wobei das Verhältnis von Ammoniak zu Harnstoff im Bereich von 1 : 99 bis 99 : 1 variiert wird, befriedigende Ergebnisse im Hinblick auf die Abscheidung der Stickoxide, wobei der gesetzliche Grenzwert von 200 mg/Nm³ nur knapp unterschritten wird. Aber auch dieses Verfahren zeigt einen bedenklich hohen Ammoniak-Schlupf sowie einen hohen Verbrauch an Reduktionsmittel.

Deutlich bessere Ergebnisse werden mit Hilfe des erfindungsgemäßen Verfahrens erzielt, wobei sämtliche Messreihen die gesetzlich vorgeschriebenen Höchstgrenzen für die Belastung der Abgase mit Stickoxiden deutlich unterschreiten. Darüber hinaus ist auch der Ammoniak-Schlupf im Vergleich zu den Verfahrensdurchlaufen ohne vorherige Kühlung der Rauchgase deutlich reduziert. Beste Ergebnisse liefert jedoch auch in diesem Fall eine Kombination der Abkühlung der Rauchgase und der Eindüsung eines Gemisches bzw. einer Mischung von Ammoniaklösung und Harnstofflösung als Reduktionsmittel. Darüber hinaus ist in diesem Verfahrensdurchlauf auch der Verbrauch an Reduktionsmitteln um 12 % gegenüber einer Eindüsung von Ammoniak- und Harnstofflösung ohne vorhergehender Kühlung der Rauchgase reduziert.

## Patentansprüche

1. Verfahren zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts, insbesondere Verfahren zur Entstickung von Abgasen aus großtechnischen Anlagen, wobei
(a) in einem ersten Verfahrensschritt eine selektive Abkühlung der Abgase erfolgt, wobei mindestens ein Kühlmittel in den Strom der Abgase eingebracht und/oder mit diesem in Kontakt gebracht wird, wobei das Kühlmittel eine Kühlflüssigkeit ist, wobei das Kühlmittel mittels Eindüseinrichtungen in den Abgasstrom eingebracht wird, wobei durch die Einbringung des Kühlmittels in den Abgasstrom der Abgasstrom insgesamt oder bereichsweise abgekühlt wird und wobei die Abgase auf Temperaturen im Bereich von 750 bis 1.200 °C gekühlt werden; und
(b) gleichzeitig und/oder nachfolgend in einem zweiten Verfahrensschritt die Entfernung und/oder Abscheidung der Stickoxide aus den Abgasen erfolgt, wobei die Abscheidung und/oder Entfernung der Stickoxide aus den Abgasen mittels chemischer Reduktion der Stickoxide erfolgt und wobei mindestens ein stickstoffhaltiges Reduktionsmittel mit den Stickoxide enthaltenden Abgasen in Kontakt gebracht wird und/oder in den Strom der Stickoxide enthaltenden Abgase eingebracht wird,
wobei mindestens ein Temperaturprofil der Abgase erstellt wird, wobei auf Grundlage des ermittelten Temperaturprofils der Abgase der Abgasstrom in Sektionen unterteilt wird, wobei den Sektionen definierte einzelne Eindüseinrichtungen zur Einbringung des Kühlmittels in den Abgasstrom und/oder definierte Gruppen von Eindüseinrichtungen zur Einbringung des Kühlmittels in den Abgasstrom zugeordnet werden, wobei die Eindüseinrichtungen zur Einbringung des Kühlmittels in den Abgasstrom einzeln oder gruppenweise auf Grundlage des ermittelten Temperaturprofils der Abgase und/oder des Lastsignals gesteuert werden,
**gekennzeichnet dadurch, dass**
die Einbringung des Kühlmittels in den Abgasstrom derart erfolgt, dass ein gewünschtes Temperaturprofil des Abgasstroms eingestellt wird.

2. Verfahren einem Anspruch 1, **dadurch gekennzeichnet, dass** das Kühlmittel in den Abgasstrom eingesprüht oder eingedüst wird.

3. Verfahren nach Anspruch 1 oder 2, **dadurch gekennzeichnet, dass** jede Eindüseinrichtung eine oder mehrere Düsen zur Einbringung des Kühlmittels in den Abgasstrom aufweist und/oder dass das Kühlmittel über 1 bis 200, insbesondere 2 bis 100, vorzugsweise 5 bis 60, bevorzugt 3 bis 36, besonders bevorzugt 1 bis 12, Eindüseinrichtungen in den Abgasstrom eingebracht wird.

4. Verfahren nach einem der vorangehenden Ansprüche, **dadurch gekennzeichnet, dass** die Abgase auf Temperaturen im Bereich von 800 bis 1.150 °C, vorzugsweise 850 bis 1.100 °C, gekühlt werden, insbesondere wobei der gesamte Querschnitt des Abgasstroms abgekühlt wird und/oder wobei ausgewählte Bereiche des Querschnitts des Abgasstroms abgekühlt werden.

5. Verfahren nach einem der vorangehenden Ansprüche, **dadurch gekennzeichnet,**
**dass** das Reduktionsmittel in Form einer wässrigen Lösung eingesetzt wird, insbesondere wobei Ammoniak und/oder Harnstoff, insbesondere in Form ihrer wässrigen Lösungen, als Reduktionsmittel eingesetzt wird, und/oder
**dass** das Reduktionsmittel in feiner Verteilung in den Abgasstrom eingebracht wird, insbesondere eingesprüht oder eingedüst wird.

6. Verfahren nach einem der vorangehenden Ansprüche, **dadurch gekennzeichnet, dass** das Reduktionsmittel mittels Eindüseinrichtungen, insbesondere Eindüslanzen, in den Abgasstrom eingebracht wird, insbesondere wobei die Eindüseinrichtungen zur Einbringung des Reduktionsmittels in den Abgasstrom einzeln und/oder gruppenweise, vorzugsweise einzeln, gesteuert werden.

7. Verfahren nach einem der vorangehenden Ansprüche, **dadurch gekennzeichnet, dass** verschiedene Eindüseinrichtungen für das Kühlmittel und für die Reduktionsmittel verwendet werden, insbesondere in verschiedenen Eindüsebenen.

8. Verfahren nach einem der vorangehenden Ansprüche, **dadurch gekennzeichnet, dass** die Einbringung des Reduktionsmittels in den Abgasstrom über eine Auswertung des Lastsignals und/oder über die Bestimmung der Abgastemperatur und/oder über einen Vergleich zwischen einem gemessenen Wert für einen Stickoxidrestgehalt des nach der Behandlung resultierenden Reingases einerseits und einem vorgegebenen Sollwert andererseits gesteuert wird.

9. Verfahren nach einem der vorangehenden Ansprüche, **dadurch gekennzeichnet,**
**dass** mindestens ein Temperaturprofil der Abgase in Form einer oder mehrerer Ebenen erstellt wird, insbesondere mittels akustischer und/oder optischer Temperaturmessung, vorzugsweise akustischer Temperaturmessung, und/oder
**dass** auf Grundlage der ermittelten Temperaturwerte der Abgase und/oder des ermittelten Temperaturprofils der Abgase der Abgasstrom in Sektionen unterteilt wird, wobei den Sektionen definierte einzelne Eindüseinrichtungen zur Einbringung des Reduktionsmittels in den Abgasstrom und/oder definierte Gruppen von Eindüseinrichtungen zur Einbringung des Reduktionsmittels in den Abgasstrom zugeordnet werden.

10. Vorrichtung (1) zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts mittels chemischer Reduktion der Stickoxide, insbesondere Vorrichtung (Anlage) (1) zur Entstickung von Abgasen aus großtechnischen Anlagen, zur Durchführung eines Verfahrens nach einem der vorangehenden Ansprüche, wobei die Vorrichtung (1) umfasst:
(a) einen Reaktor (2) zum Inkontaktbringen mindestens eines Kühlmittels und zum Inkontaktbringen und/oder zur Umsetzung mindestens eines Reduktionsmittels mit den Stickoxide enthaltenden Abgasen, wobei der Reaktor (2) eine Mehrzahl von Eindüseinrichtungen (3A, 3B) zur Einbringung von mindestens einem Kühlmittel (4) sowie eine Mehrzahl von Eindüseinrichtungen (5) zur Einbringung von mindestens einem stickstoffhaltigen Reduktionsmittel (6, 7) aufweist, wobei die Eindüseinrichtungen (3A, 3B, 5) einzeln und/oder gruppenweise, vorzugsweise einzeln, regelbar sind,
(b) mindestens eine über mindestens eine Zuführleitung (8A) mit den Eindüseinrichtungen (3A, 3B) verbundene Bevorratungseinrichtung (8) zur Bevorratung und/oder Abgabe mindestens eines Kühlmittels (4),
(c) mindestens eine über mindestens eine Zuführleitung (9A, 10A) mit den Eindüseinrichtungen (5) verbundene Bevorratungseinrichtung (9, 10) zur Bevorratung und/oder Abgabe mindestens eines Reduktionsmittels (6, 7),
(d) eine Messeinrichtung (16) zur Erstellung eines Temperaturprofils der Abgase und
(e) Mittel zur Steuerung der Einbringung des Kühlmittels (4) in den Abgasstrom, wobei auf Grundlage des ermittelten Temperaturprofils der Abgase der Abgasstrom in Sektionen unterteilt wird, wobei den Sektionen definierte einzelne Eindüseinrichtungen (3A, 3B) zur Einbringung des Kühlmittels (4) in den Abgasstrom und/oder definierte Gruppen von Eindüseinrichtungen (3A, 3B) zur Einbringung des Kühlmittels in den Abgasstrom (4) zugeordnet werden,
**gekennzeichnet dadurch, dass** die Mittel zur Steuerung vorbereitet sind, um die Eindüseinrichtungen (3A, 3B) zur Einbringung des Kühlmittels (4) in den Abgasstrom, einzeln oder gruppenweise, auf Grundlage des ermittelten Temperaturprofils der Abgase und gegebenenfalls eines Lastsignals derart zu steuern, dass durch die Einbringung des Kühlmittels (4) in den Abgasstrom ein gewünschtes Temperaturprofil eingestellt wird, wobei der Abgasstrom durch die Einbringung des Kühlmittels (4) zumindest bereichsweise auf Temperaturen im Bereich von 750 bis 1200°C eingestellt wird.

11. Vorrichtung nach Anspruch 10, **dadurch gekennzeichnet,**
**dass** die Einbringung des Kühlmittels (4) und die Einbringung des Reduktionsmittels (6,7) in den Abgasstrom aufeinander abstimmbar ist und/oder
**dass** die Vorrichtung (1), insbesondere stromaufwärts zu den Eindüseinrichtungen (3) zur Einbringung des Kühlmittels angeordnet, eine Messeinrichtung (16) zur Bestimmung der Temperatur des Abgases und/oder zur Erstellung eines Temperaturprofils des Abgases mittels akustischer oder optischer Temperaturmessung, vorzugsweise mittels akustischer Temperaturmessung, aufweist.

12. Verwendung einer Vorrichtung nach einem der vorangehenden Ansprüche zur Entfernung und/oder Abscheidung von Stickoxiden aus Stickoxide enthaltenden Abgasen technischer Prozesse, insbesondere Rauchgasen.

13. Verwendung einer Vorrichtung nach einem der vorangehenden Ansprüche zur selektiven Abkühlung von Abgasen aus technischen Prozessen, insbesondere Rauchgasen.

## Claims

1. A method for treating exhaust gases containing nitrogen oxides from technical processes, such as flue gases, for the purpose of removing and/or separating nitrogen oxides and/or for the purpose of reducing nitrogen oxide content, in particular a method for denitrifying exhaust gases from large-scale plants,
wherein
(a) in a first method step the exhaust gases is selectively cooled, wherein at least one coolant is introduced into the flow of exhaust gases and/or is brought into contact therewith, wherein the coolant is a cooling liquid, wherein the coolant is introduced by means of injection devices into the exhaust gas flow, wherein the exhaust gas flow is cooled as a whole or in sections by the introduction of the coolant into the exhaust gas flow, and wherein the exhaust gases are cooled to temperatures in the range of from 750 to 1200°C; and
(b) nitrogen oxides are removed and/or separated from the exhaust gases simultaneously and/or subsequently in a second method step, wherein the nitrogen oxides are separated and/or removed from the exhaust gases by means of the chemical reduction of the nitrogen oxides, and wherein at least one nitrogen-containing reducing agent is brought into contact with the exhaust gases containing nitrogen oxides and/or is introduced into the flow of exhaust gases containing nitrogen oxides,
wherein at least one temperature profile of the exhaust gases is created, wherein the exhaust gas flow is subdivided into sections on the basis of the determined temperature profile of the exhaust gases, wherein defined individual injection devices for introducing the coolant into the exhaust gas flow and/or defined groups of injection devices for introducing the coolant into the exhaust gas flow are associated with the sections, wherein the injection devices for introducing the coolant into the exhaust gas flow are controlled individually or in groups on the basis of the determined temperature profile of the exhaust gases and/or of the load signal,
**characterised in that**
the coolant is introduced into the exhaust gas flow such that a desired temperature profile of the exhaust gas flow is configured.

2. The method according to claim 1, **characterised in that** the coolant is sprayed or injected into the exhaust gas flow.

3. The method according to claim 1 or 2, **characterised in that** each injection device has one or more nozzles for introducing the coolant into the exhaust gas flow and/or that the coolant is introduced into the exhaust gas flow via 1 to 200, in particular 2 to 100, preferably 5 to 60, more preferably 3 to 36, particularly preferably 1 to 12 injection devices.

4. The method according to one of the preceding claims, **characterised in that** the exhaust gases are cooled to temperatures in the range of from 800 to 1150°C, preferably 850 to 1100°C, in particular wherein the entire cross section of the exhaust gas flow is cooled and/or wherein selected regions of the cross section of the exhaust gas flow are cooled.

5. The method according to one of the preceding claims, **characterised**
**in that** the reducing agent is used in the form of an aqueous solution, in particular wherein ammonia and/or urea, in particular in the form of the aqueous solutions thereof, is used as the reducing agent, and/or
that the reducing agent is introduced into the exhaust gas flow in a fine distribution, in particular sprayed or injected.

6. The method according to one of the preceding claims, **characterised in that** the reducing agent is introduced into the exhaust gas flow by means of injection devices, in particular injection lances, in particular wherein the injection devices for introducing the reducing agent into the exhaust gas flow are controlled individually and/or in groups, preferably individually.

7. The method according to one of the preceding claims, **characterised in that** different injection devices are used for the coolant and for the reducing agent, in particular at different injection planes.

8. The method according to one of the preceding claims, **characterised in that** the introduction of the reducing agent into the exhaust gas flow is controlled via an evaluation of the load signal and/or via the determination of the exhaust gas temperature and/or via a comparison between a measured value for a residual nitrogen oxide content of the pure gas resulting after the treatment on the one hand, and a predetermined set point on the other hand.

9. The method according to one of the preceding claims, **characterised in**
**that** at least one temperature profile of the exhaust gases is created in the form of one or more planes, in particular by means of acoustic temperature measurement and/or optical temperature measurement, preferably acoustic temperature measurement, and/or
in that the exhaust gas flow is subdivided into sections on the basis of the determined temperature values of the exhaust gases and/or of the determined temperature profile of the exhaust gases, wherein defined individual injection devices for introducing the reducing agent into the exhaust gas flow and/or defined groups of injection devices for introducing the reducing agent into the exhaust gas flow are associated with the sections.

10. An apparatus (1) for treating exhaust gases containing nitrogen oxides from technical processes, such as flue gases, for purpose of removing and/or separating nitrogen oxides and/or for the purpose of reducing nitrogen oxide content by means of the chemical reduction of nitrogen oxides, in particular an apparatus (plant) (1) for denitrifying exhaust gases from large-scale plants, for carrying out a method according to one of the preceding claims,
wherein the apparatus (1) comprises:
(a) a reactor (2) for bringing into contact at least one coolant and for bringing into contact and/or reacting at least one reducing agent with exhaust gases containing nitrogen oxides, wherein the reactor (2) comprises a plurality of injection devices (3A, 3B) for introducing at least one coolant (4) and a plurality of injection devices (5) for introducing at least one nitrogen-containing reducing agent (6, 7), wherein the injection devices (3A, 3B, 5) are adjustable individually and/or in groups, preferably individually,
(b) at least one storage device (8) connected to the injection devices (3A, 3B) via at least one supply line (8A) for storing and/or dispensing at least one coolant (4),
(c) at least one storage device (9, 10) connected to the injection devices (5) via at least one supply line (9A, 10A) for storing and/or dispensing at least one reducing agent (6, 7),
(d) a measuring device (16) for creating a temperature profile of the exhaust gases and
(e) means for controlling the introduction of the coolant (4) into the exhaust gas flow, wherein the exhaust gas flow is subdivided into sections on the basis of the determined temperature profile of the exhaust gases, wherein defined individual injection devices (3A, 3B) for introducing the coolant (4) into the exhaust gas flow and/or defined groups of injection devices (3A, 3B) for introducing the coolant into the exhaust gas flow (4) are associated with the sections,
**characterised in that**
the means for control are prepared to control the injection devices (3A, 3B) for introducing the coolant (4) into the exhaust gas flow, individually or in groups, on the basis of the determined temperature profile of the exhaust gases and optionally of a load signal such that a desired temperature profile is configured for introducing the coolant (4) into the exhaust gas flow, wherein the exhaust gas flow is configured at least in regions to temperatures in the range of from 750 to 1200°C by the introduction of the coolant (4).

11. The apparatus according to claim 10, **characterised**
**in that** the introduction of the coolant (4) and the introduction of the reducing agent (6, 7) into the exhaust gas flow can be coordinated with one another and/or
**in that** the apparatus (1), in particular arranged upstream of the injection devices (3) for introducing the coolant, comprises a measuring device (16) for determining the temperature of the exhaust gas and/or for creating a temperature profile of the exhaust gas by means of acoustic temperature measurement or optical temperature measurement, preferably by means of acoustic temperature measurement.

12. A use of an apparatus according to one of the preceding claims for removing and/or separating nitrogen oxides from exhaust gases containing nitrogen oxides of industrial processes, in particular flue gases.

13. The use of an apparatus according to one of the preceding claims for the selective cooling of exhaust gases from technical processes, in particular flue gases.

## Revendications

1. Procédé de traitement de gaz d'échappement contenant des oxydes d'azote provenant de processus techniques, tels que les gaz de combustion, en vue de l'élimination et / ou de la séparation des oxydes d'azote et / ou de la réduction de la teneur en oxydes d'azote, en particulier des processus de dénitrification des gaz d'échappement d'installations industrielles,
dans lequel
(a) dans une première étape du procédé, on effectue un refroidissement sélectif des gaz d'échappement, au moins un fluide de refroidissement étant introduit dans le flux de gaz d'échappement et / ou mis en contact avec celui-ci, le fluide de refroidissement étant un liquide de refroidissement, le fluide de refroidissement étant introduit au moyen de dispositifs d'injection dans le flux de gaz d'échappement, l'introduction du fluide de refroidissement dans le flux de gaz d'échappement permettant de refroidir celui-ci en tout ou en partie, et les gaz d'échappement étant refroidis à des températures comprises dans l'intervalle allant de 750 à 1200 °C ; et
(b) l'élimination et / ou la séparation des oxydes d'azote des gaz d'échappement a lieu simultanément et / ou ultérieurement dans une deuxième étape du procédé, l'élimination et / ou la séparation des oxydes d'azote des gaz d'échappement ayant lieu par réduction chimique des oxydes d'azote et au moins un agent réducteur contenant de l'azote étant mis en contact avec les gaz d'échappement contenant des oxydes d'azote et / ou introduit dans le flux de gaz d'échappement contenant des oxydes d'azote,
au moins un profil de température des gaz d'échappement étant créé, le flux de gaz d'échappement étant divisé en sections sur la base du profil de température déterminé des gaz d'échappement, des dispositifs d'injection définis individuels pour introduire le fluide réfrigérant dans le flux de gaz d'échappement et / ou des groupes définis de dispositifs d'injection pour introduire le réfrigérant dans le flux de gaz d'échappement étant associés aux sections, les dispositifs d'injection pour introduire le fluide de refroidissement dans le flux de gaz d'échappement étant commandés individuellement ou par groupes sur la base du profil de température déterminé des gaz d'échappement et / ou du signal de charge,
**caractérisé en ce que**
l'introduction du fluide de refroidissement dans le flux de gaz d'échappement est réalisée de façon à ajuster un profil de température souhaité du flux de gaz d'échappement.

2. Procédé selon la revendication 1, **caractérisé en ce que** le fluide de refroidissement est pulvérisé ou injecté dans le flux de gaz d'échappement.

3. Procédé selon la revendication 1 ou 2, **caractérisé en ce que** chaque dispositif d'injection comporte une ou plusieurs buses pour introduire le fluide de refroidissement dans le flux de gaz d'échappement et / ou **en ce que** le fluide de refroidissement est introduit dans le flux de gaz d'échappement par 1 à 200, en particulier 2 à 100, de préférence 5 à 60, de manière plus préférée 3 à 36, de manière particulièrement préférée, 1 à 12, dispositifs d'injection.

4. Procédé selon l'une des revendications précédentes, **caractérisé en ce que** les gaz d'échappement sont refroidis à des températures situées dans l'intervalle allant de 800 à 1150 °C, de préférence de 850 à 1100 °C, en particulier toute la section transversale du flux de gaz d'échappement étant refroidie et / ou des zones sélectionnées de la coupe transversale du flux de gaz d'échappement étant refroidies.

5. Procédé selon une des revendications précédentes, **caractérisé**
**en ce que** l'agent réducteur est utilisé sous la forme d'une solution aqueuse, en particulier de l'ammoniac et / ou de l'urée, en particulier sous la forme de leurs solutions aqueuses, étant utilisés en tant qu'agent réducteur, et / ou
**en ce que** l'agent réducteur est introduit dans le flux de gaz d'échappement sous une forme finement divisée, notamment pulvérisé ou injecté.

6. Procédé selon l'une des revendications précédentes, **caractérisé en ce que** l'agent réducteur est introduit dans le flux de gaz d'échappement au moyen de dispositifs d'injection, en particulier de lances d'injection, en particulier dans lequel les dispositifs d'injection pour introduire l'agent réducteur dans le flux de gaz d'échappement sont commandés individuellement et / ou par groupes, de préférence individuellement.

7. Procédé selon l'une des revendications précédentes, **caractérisé en ce que** des dispositifs d'injection différents sont utilisés pour le fluide de refroidissement et pour l'agent réducteur, en particulier à différents niveaux d'injection.

8. Procédé selon l'une des revendications précédentes, **caractérisé en ce que** l'introduction de l'agent réducteur dans le flux de gaz d'échappement est commandée via une évaluation du signal de charge et / ou via la détermination de la température des gaz d'échappement et / ou une comparaison entre une valeur mesurée d'une teneur en oxyde d'azote résiduelle du gaz pur résultant du traitement d'une part et une valeur de consigne prédéterminée d'autre part.

9. Procédé selon une des revendications précédentes, caractérisé
qu'au moins un profil de température des gaz d'échappement est créé sous la forme d'un ou de plusieurs plans, en particulier par une mesure acoustique et / ou optique de la température, de préférence une mesure acoustique de la température, et / ou
en ce que le flux de gaz d'échappement est subdivisé en sections sur la base des valeurs de température déterminées des gaz d'échappement et / ou du profil de température déterminé des gaz d'échappement, les sections étant associées à des dispositifs d'injection individuels définis pour introduire l'agent réducteur dans le flux de gaz d'échappement et / ou des groupes définis de dispositifs d'injection pour introduire l'agent réducteur dans le flux de gaz d'échappement.

10. Dispositif (1) pour le traitement des gaz d'échappement contenant des oxydes d'azote provenant de processus techniques, tels que les gaz de combustion, en vue de l'élimination et / ou de la séparation des oxydes d'azote et / ou en vue de la réduction de la teneur en oxydes d'azote par réduction chimique des oxydes d'azote, notamment dispositif (installation) (1) pour la dénitrification de gaz d'échappement d'installations industrielles, pour la mise en oeuvre d'un procédé selon l'une des revendications précédentes,
le dispositif (1) comprenant :
(a) un réacteur (2) pour mettre en contact au moins un fluide de refroidissement et pour mettre en contact et / ou faire réagir au moins un agent réducteur avec les gaz d'échappement contenant des oxydes d'azote, le réacteur (2) comportant une pluralité de dispositifs d'injection (3A, 3B) pour l'introduction d'au moins un fluide de refroidissement (4) et une pluralité de dispositifs d'injection (5) pour l'introduction d'au moins un agent réducteur contenant de l'azote (6, 7), dans lequel les dispositifs d'injection (3A, 3B, 5) sont réglables individuellement et / ou par groupes, de préférence individuellement,
(b) au moins un dispositif de stockage (8) relié aux dispositifs d'injection (3A, 3B) par au moins une conduite d'alimentation (8A) pour stocker et / ou distribuer au moins un fluide de refroidissement (4),
(c) au moins un dispositif de stockage (9, 10) relié aux dispositifs d'injection (5) par au moins une conduite d'alimentation (9A, 10A) pour stocker et / ou distribuer au moins un agent réducteur (6, 7),
(d) un dispositif de mesure (16) pour établir un profil de température des gaz d'échappement et
(e) des moyens pour commander l'introduction du fluide de refroidissement (4) dans le flux de gaz d'échappement, le flux de gaz d'échappement étant divisé en sections sur la base du profil de température déterminé des gaz d'échappement, des moyens d'injection individuels définis (3A, 3B) pour l'introduction du fluide de refroidissement (4) dans le flux de gaz d'échappement et / ou des groupes définis de dispositifs d'injection (3A, 3B) pour l'introduction du fluide de refroidissement dans le flux de gaz d'échappement (4) étant associés aux sections,
**caractérisé en ce que**
les moyens de commande sont préparés pour commander les dispositifs d'injection (3A, 3B) pour l'introduction du fluide de refroidissement (4) dans le flux de gaz d'échappement, individuellement ou par groupes, sur la base du profil de température déterminé des gaz d'échappement et éventuellement d'un signal de charge de telle sorte que par l'introduction du fluide de refroidissement (4) dans le flux de gaz d'échappement, un profil de température souhaité soit défini, le flux de gaz d'échappement étant ajusté par l'introduction du fluide de refroidissement (4) au moins par zones à des températures comprises entre 750 et 1200 °C.

11. Dispositif selon la revendication 10, **caractérisé**
**en ce que** l'introduction du fluide de refroidissement (4) et l'introduction de l'agent réducteur (6, 7) dans le flux de gaz d'échappement peuvent être coordonnées l'une avec l'autre et / ou
**en ce que** le dispositif (1), en particulier disposé en amont des dispositifs d'injection (3) pour l'introduction du fluide de refroidissement, comporte un dispositif de mesure (16), pour déterminer la température des gaz d'échappement et / ou pour produire un profil de température des gaz d'échappement au moyen d'une mesure acoustique ou optique de la température, de préférence au moyen d'une mesure acoustique de la température.

12. Utilisation d'un dispositif selon l'une des revendications précédentes pour l'élimination et / ou la séparation des oxydes d'azote des gaz d'échappement contenant des oxydes d'azote, provenant de processus industriels, en particulier des gaz de combustion.

13. Utilisation d'un dispositif selon l'une des revendications précédentes pour le refroidissement sélectif de gaz d'échappement provenant de processus industriels, en particulier de gaz de combustion.
